# EUROPÄISCHE PATENTSCHRIFT

(11) **EP 2 167 595 B1**
(45) Veröffentlichungstag und Bekanntmachung des Hinweises auf die Patenterteilung: **15.08.2012**
(21) Anmeldenummer: 08774114.6
(22) Anmeldetag: 18.06.2008
(51) Int. Cl.: C09D 125/00, C09D 125/14

(54) **VERFAHREN ZUM AUFBRINGEN VON KORROSIONSSCHUTZSCHICHTEN AUF METALLISCHE OBERFLÄCHEN**
METHOD FOR APPLYING CORROSION PROTECTION COATINGS TO METAL SURFACES
PROCÉDÉ DESTINÉ À POSER DES COUCHES ANTICORROSIVES SUR DES SURFACES MÉTALLIQUES

(30) Priorität: 20.06.2007 EP 07110652
(43) Veröffentlichungstag der Anmeldung: 31.03.2010
(73) Patentinhaber: BASF SE, 67056 Ludwigshafen (DE)
(72) Erfinder: VANDERMEULEN, Guido, 68549 Ilvesheim (DE); ROSCHMANN, Konrad, 67069 Ludwigshafen-Edigheim (DE); AMTHOR, Stephan, 67063 Ludwigshafen (DE); SCHROEDER, Marc, Canton, MI 48188 (US); BERGER, Alexsandro, 68165 Mannheim (DE); KLIPPEL, Frank, 67067 Ludwigshafen (DE)
(86) Internationale Anmeldenummer: PCT/EP2008/057653
(87) Internationale Veröffentlichungsnummer: WO 2008/155337

(56) Entgegenhaltungen:
- DE-A1- 2 346 651
- DE-A1- 2 365 583
- DE-A1- 3 138 196
- DE-A1- 19 838 850

## Beschreibung

Die vorliegende Erfindung betrifft ein Verfahren zum Aufbringen von atmosphärischen Korrosionsschutzschichten auf metallische Oberflächen, bei dem man Copolymere einsetzt, welche als monomere Bausteine Nitrilgruppen aufweisende Monomere, saure Gruppen aufweisende Monomere sowie vinylaromatische Monomere aufweisen. Sie betrifft weiterhin Zubereitungen zum Aufbringen von Korrosionsschutzschichten.

Metallische Gegenstände, Bauteile, Bauwerke oder Metallkonstruktionen aus üblichen metallischen Werkstoffen müssen im Regelfalle vor Korrosion geschützt werden. Eine wesentliche Rolle im Korrosionsschutz nehmen hierbei Beschichtungen ein, mit denen die metallische Oberfläche vor dem Einfluss korrosiver Medien abgeschirmt wird. Geeignete Beschichtungssysteme zum Korrosionsschutz enthalten üblicherweise eines oder mehrere Bindemittel, Korrosionsschutzpigmente, gegebenenfalls organische Korrosionsinhibitoren sowie weitere Zusatzstoffe und Additive.

Zum Aufbringen von Korrosionsschutzschichten können verschiedene Techniken zum Einsatz kommen.

Bei immobilen metallischen Konstruktionen wie beispielsweise Gebäuden, Brücken, Strommasten, Öltanks, Pipelines, Kraftwerken oder chemischen Anlagen werden Korrosionsschutzbeschichtungen naturgemäß üblicherweise an Ort und Stelle aufgestrichen oder aufgespritzt. Die Trocknung und Härtung derartiger Korrosionsschutzbeschichtungen erfolgt unter atmosphärischen Bedingungen also bei Umgebungstemperatur sowie in Gegenwart von Luft und üblicher Luftfeuchtigkeit. Diese Art von Korrosionsschutz wird auch als atmosphärischer Korrosionsschutz bezeichnet, häufig je nach Art der Korrosionsbelastung als leichter, mittlerer oder schwerer Korrosionsschutz.

DE 2365583 und DE 2346651 beschreiben Terpolymere, bestehend aus bis zu 80 Gew% Styrol oder Styrolderivaten, mindestens 15 Gew% eines äthylenisch-ungesättigten Nitrilmonomeren und 5 bis 35 Gew% eines äthylenisch-ungesättigten Säuremonomeren, das gegebenenfalls neutralisiert sein kann. Einsatz finden derartige Terpolymere als Bestandteil von Beschichtung von Dosen für Lebensmittel. Dazu werden die Beschichtungen für 60 bis 90 Sekunden bei einer Temperatur von 205 °C eingebrannt.

Auf die Verwendbarkeit solcher Copolymere im atmosphärischen Korrosionsschutz wird nicht hingewiesen.

US 3707516 beschreibt eine Beschichtungszusammensetzung aus 5-50 Gew% filmbildenden Bestandteilen in einem organischen Lösungsmittel. Die filmbildende Bestandteile bestehen aus Pfropfkopolymere mit 10-75 Gew% eines polymeren Rückgrats und 9-25 Gew% polymeren Seitenketten. Der polymere Rückgrat besteht aus einem Copolymer von Acrylnitril, Methylmethacrylat, Styrol, und Mischungen hiervon, sowie weniger als 5 Gew% einer einpolymerisierten äthylenisch-ungesättigten Carboxylsäure. Diese Beschichtungszusammensetzung kann als Grundierung oder Lack eingesetzt werden um Metalle gegen Salzkorrosion zu schützen.

JP 55-066940 beschreibt eine wässrige Beschichtungszusammensetzung die bei Raumtemperatur trocknet zur Beschichtung von Metalloberflächen. Die Beschichtungen zeigen eine verbesserte chemische Beständigkeit, Verwitterungsstabilität, Glanz und Haftung. Ein Polymerhydrosol wird dabei in ein wasserlösliches Harz eingearbeitet. Das Polymerhydrosol besteht aus Partikeln einer Teilchengröße von etwa 0,1 µm hergestellt durch Polymerisation von einer α,β-monoäthylenisch ungesättigten Carbonsäure, ein Alkenyl aromatisches Monomer, ein (Meth)Acrylester und 30 Gew% eines anderen α,β-monoäthylenisch ungesättigten Monomers, z.B. Acrylnitril.

Bei den in dieser Schrift beschriebenen Copolymeren handelt es sich um Sekundärdispersionen. Das Verhältnis dieser als "Additiv" bezeichneten Copolymere zum Bindemittel liegt zwischen 95:5 und 55:45 und stellt somit den Hauptbstandteil der Beschichtungsmittel dar.

WO 91/14722 (Henkel, auch EP 311906) beschreibt wässrige Polyacrylatdispersionen oder Polyacrylatemulsionen, erhältlich durch Copolymerisation von einem, mindestens eine Carboxylgruppe tragenden Monomer, welches vor der Copolymerisation neutralisiert wurde und wenigstens einem anderen hydrophoben Monomer. Zusätzlich enthält die Mischung einen Emulgator, und mindestens ein Verdickungsmittel. Die Zusammensetzung wird verwendet als Beschichtungsmittel zum temporären Schutz von harten Oberflächen.

Aufgabe der Erfindung war es, ein verbessertes Verfahren zum Aufbringen von Korrosionsschutzschichten für den atmosphärischen Korrosionsschutz sowie verbesserte Korrosionsschutzmittel bereitzustellen.

Dementsprechend wurde ein Verfahren zum Aufbringen von Korrosionsschutzschichten auf metallische Oberflächen gefunden, bei dem man auf die blanke oder vorbeschichtete metallische Oberfläche eine unter atmosphärischen Bedingungen härtbare Zubereitung in einer Dicke von mindestens 15 µm aufbringt, wobei die Zubereitung mindestens umfasst
- 15 bis 70 Gew. % mindestens eines unter atmosphärischen Bedingungen härtbaren Bindemittelsystems (A),
- 1 bis 70 Gew. % mindestens einer Komponente (B), ausgewählt aus der Gruppe von feinteiligen Füllstoffen, Pigmenten oder Farbstoffen,
- 0,1 bis 40 Gew. % eines polymeren Korrosionsschutzmittels (C), sowie
- 5 bis 83,9 Gew. % mindestens eines Lösemittels (D), wobei es sich bei dem polymeren Korrosionsschutzmittel um ein Copolymer (C) handelt, welches aus folgenden monomeren Bausteinen aufgebaut ist:
   (C1) 5 bis 60 Gew. % mindestens eines monoethylenisch ungesättigten Monomers, welches mindestens eine, bevorzugt genau eine Nitrilgruppe aufweist,
   (C2) 10 bis 70 Gew. % mindestens eines monoethylenisch ungesättigten Monomers, welches mindestens eine Säuregruppe umfasst,
   (C3) 20 bis 80 Gew. % mindestens eines monoethylenisch ungesättigten, aromatischen Kohlenwasserstoffes, sowie
   (C4) optional 0 bis 25 Gew. % von weiteren von (C1) bis (C3) verschiedenenethylenisch ungesättigten Monomeren,
wobei die Menge jeweils auf die Gesamtmenge aller monomeren Baueinheiten im Copolymer bezogen ist,
und anschließendem Härten der aufgebrachten Schicht unter atmosphärischen Bedingungen,
wobei unter atmosphärischen Bedingungen Härtungstemperaturen von mehr als 0 bis 40 °C in Gegenwart von Luft und eine relative Luftfeuchtigkeit von 10 bis 80% verstanden werden.

Dieses Korrosionsschutzmittel ist auch in geringen Mengen wirksam und ist leicht mit den anderen Komponenten der Beschichtungsmasse vermischbar.

Der Unterschied der Ansprüche der Beschichtungen und Beschichtungsmassen vom atmosphärischen Korrosionsschutz gegenüber anderen Korrosionsschutzbedingungen liegt darin, daß die Beschichtungen im atmosphärischen Korrosionsschutz eine wesentlich höhere Schichtdicke aufweisen als in anderen Anwendungen und bei Umgebungstemperaturen getrocknet und gehärtet werden, so daß Trocknung und Härtung wesentlich längere Zeiträume umfaßt. Zumeist und bevorzugt wird die Korrosionsschutzbeschichtung auch unter atmosphärischen Bedingungen aufgebracht. Während des gesamten Zeitraums sind die ungehärteten nassen Beschichtungen anfällig gegen z.B. Spritzwasser oder Bewitterungseinflüsse, so daß an die Beschichtungsmassen deutlich andere Anforderungen gestellt werden als an andere Korrosionsschutzbeschichtungsmassen.

Bei der Erfindung handelt es sich um ein Verfahren zum atmosphärischen Korrosionsschutz, bei dem man ein unter atmosphärischen Bedingungen härtbares Bindemittelsystems einsetzt und man die Schicht nach dem Aufbringen unter atmosphärischen Bedingungen härtet.

In einem weiteren Aspekt betrifft die Erfindung Formulierungen zum Aufbringen von Korrosionsschutzschichten, welche die eingangs genanten Copolymere umfassen.

Überraschenderweise wurde gefunden, dass die erfindungsgemäßen Copolymere zu verbesserten Korrosionsschutzschichten für den atmosphärischen Korrosionsschutz führen. Die Copolymere verleihen der Oberfläche einen guten Korrosionsschutz, eine gute Haftung und können auch die mechanischen Eigenschaften der Lacke signifikant verbessern. Durch Einbau zusätzlicher Hydroxy- und/oder Amino-Funktionalitäten kann die Anbindung der Copolymere an das Bindemittelsystem verbessert werden. Zusätzlich hat das Copolymer eine gewisse Amphiphilie, es ist also fähig Grenzflächen wie Metall-Lack, Lack-Umgebung, hydrophob-hydrophile Grenzflächen im Lack zu stabilisieren.

Zu der Erfindung ist im Einzelnen das Folgende auszuführen:

### Copolymer (C)

Das erfindungsgemäße Copolymer (C) ist aus den Monomeren (C1), (C2), (C3) sowie optional (C4) aufgebaut, wobei selbstverständlich jeweils mehrere verschiedene Monomere (C1), (C2), (C3) bzw. optional (C4) eingesetzt werden können. Außer (C1), (C2), (C3) und gegebenenfalls (C4) sind keine weiteren Monomere vorhanden.

### Monomere (C1)

Bei den Monomeren (C1) handelt es sich um mindestens ein monoethylenisch ungesättigtes Monomer, welches mindestens eine, bevorzugt genau eine Nitrilgruppe aufweist.

Diese Monomere (C1) tragen außer der Nitrilgruppe und der monoethylenisch ungesättigten Gruppe bevorzugt keine weitere funktionelle Gruppen.

Die Zahl der Nitrilgruppen beträgt 1 bis 2, bevorzugt genau 1.

Beispiele für Monomere (C1) sind Acrylnitril, Methacrylnitril, Fumarodinitril und Maleidinitril, bevorzugt Acrylnitril oder Methacrylnitril

Ganz besonders bevorzugt handelt es sich bei Monomer (C1) um Acrylnitril.

Die Menge aller Monomere (C1) zusammen beträgt erfindungsgemäß 5 bis 60 Gew.-%, bezogen auf die Gesamtmenge aller monomeren Baueinheiten in Copolymer (C). Bevorzugt beträgt die Menge 5 bis 45 Gew. % und besonders bevorzugt 10 bis 35 Gew. %.

### Monomere (C2)

Bei den Monomeren (C2) handelt es sich um monoethylenisch ungesättigte Monomere, welche mindestens eine Säuregruppe aufweisen. Die Säuregruppe kann als freie Säuregruppe oder aber auch ganz oder teilweise als Salz vorliegen.

Bevorzugt handelt es sich bei den Säuregruppen um mindestens eine ausgewählt aus der Gruppe von Carboxylgruppen, Phosphorsäuregruppen, Phosphonsäuregruppen und Sulfonsäuregruppen.

Beispiele von Monomeren mit COOH-Gruppen umfassen (Meth)acrylsäure, Vinylessigsäure, Crotonsäure oder Isocrotonsäure. Es kann sich auch um Monomere mit 2 COOH-Gruppen handeln. Beispiele umfassen Maleinsäure, Fumarsäure, Methylfumarsäure, Methylmaleinsäure, Dimethylmaleinsäure sowie gegebenenfalls die entsprechenden cyclischen Anhydride. Bevorzugte Monomere mit COOH-Gruppen sind (Meth)acrylsäure sowie Itaconsäure.

Beispiele von Monomeren, welche Phosphorsäure- und/oder Phosphonsäuregruppen aufweisen umfassen Vinylphosphonsäure, Phosphorsäuremonovinylester, Allylphosphonsäure, Phosphorsäuremonoallylester, 3-Butenylphosphonsäure, Phosphorsäure-(mono-3-butenyl)ester, Phosphorsäuremono-(4-vinyloxybutyl)ester, Acrylsäure(phosphonoxyethyl)ester, Methacrylsäure(phosphonoxyethyl)ester, Phosphorsäure mono-(-2-hydroxy-3-vinyloxy-propyl)ester, Phosphorsäuremono-(1-phosphonoxymethyl-2-vinyloxy-ethyl)-ester, Phosphorsäuremono-(3-allyloxy-2-hydroxy-propyl)ester, Phosphorsäure mono-2-(allylox-1-phosphonoxymethyl-ethyl)ester, 2-Hydroxy-4-vinyloxymethyl-1,3,2-dioxaphosphol oder 2-Hydroxy-4-allyloxymethyl-1,3,2-dioxaphosphol. Bevorzugt als Phosphorsäure- und/oder Phosphonsäuregruppen aufweisendes Monomer ist Vinylphosphonsä ure.

Beispiele sulfonsäuregruppenhaltiger Monomere umfassen Allylsulfonsäure, Methallylsulfonsäure, Styrolsulfonat, Vinylsulfonsäure, Allyloxybenzolsulfonsäure, 2-Acrylamido-2-methylpropansulfonsäure oder 2-(Methyacryloyl)ethylsulfonsäure. Bevorzugt als sulfonsäuregruppenhaltiges Monomer ist Acrylamido-2-methylpropansulfonsäure.

Beim atmosphärischen Korrosionsschutz werden als Monomer (C2) besonders bevorzugt COOH- und Sulfonsäuregruppen-haltige Monomere eingesetzt, ganz besonders bevorzugt ist Itaconsäure.

Die Menge aller Monomere (C2) zusammen beträgt erfindungsgemäß 10 bis 70 Gew. %, bezogen auf die Gesamtmenge aller monomeren Baueinheiten in Copolymer (C). Bevorzugt beträgt die Menge 15 bis 60 Gew. % und besonders bevorzugt 20 bis 55 Gew. %.

### Monomere (C3)

Bei den Monomeren (C3) handelt es sich um mindestens einen monoethylenisch ungesättigten, aromatischen Kohlenwasserstoff.

Beispiele derartiger Kohlenwasserstoffe umfassen insbesondere Styrol sowie Derivate von Styrol, wie α-Methylstyrol, 2-Vinyltoluol, 4-Vinyltoluol oder Allylbenzol.

Besonders bevorzugt handelt es sich um Stryol.

Die Menge aller Monomere (C3) zusammen beträgt erfindungsgemäß 20 bis 80 Gew. %, bezogen auf die Gesamtmenge aller monomeren Baueinheiten in Copolymer (C). Bevorzugt beträgt die Menge 30 bis 70 Gew. % und besonders bevorzugt 35 bis 65 Gew. %.

### Monomere (C4)

Die erfindungsgemäß verwendeten Copolymere (C) können darüber hinaus noch 0 bis 25 Gew. %, bevorzugt 0 bis 15 Gew. % und besonders bevorzugt 0 bis 10 Gew. % anderer ethylenisch ungesättigter Monomere (C4), die von (C1), (C2) und (C3) verschieden, aber mit (C1), (C2) und (C3) copolymerisierbar sind, als Baueinheiten enthalten. Derartige Monomere können -falls erforderlich- zu Feinjustierung der Eigenschaften des Copolymers (C) eingesetzt werden.

Es kann eine bevorzugt Ausführungsform der vorliegenden Erfindung darstellen, auf ein weiteres Monomer (C4) vollständig zu verzichten.

Bevorzugt handelt es sich bei den Monomeren (C4) um monoethylenisch ungesättigte, von den Monomeren (C1) bis (C3) verschiedene Monomere. Der Fachmann trifft hinsichtlich Art und Menge derartiger Monomere (C4) je nach den gewünschten Eigenschaften sowie der gewünschten Anwendung des Polymers eine geeignete Auswahl.

Bevorzugt handelt es sich bei Monomer (C4) um ein OH-Gruppen aufweisendes Monomer. Insbesondere kann es sich um C₁- bis C₄-Hydroxyalkylester der (Meth)acrylsäure handeln, wie beispielsweise 2-Hydroxyethyl(meth)acrylat, 2-Hydroxypropyl(meth) acrylat oder Butandiol-1,4-mono-acrylat. Bevorzugt ist 2-Hydroxyethylacrylat.

Weiterhin bevorzugt kann es sich um ein -NH₂-Gruppen aufweisendes Monomer handeln, bzw. ein Monomer, welches bei Hydrolyse -NH₂-Gruppen bilden kann. Ein Beispiel für ein derartiges Monomer ist N-Vinylformamid.

OH- und/oder NH₂-Gruppen können zur besseren Anbindung des Copolymers (C) an das Bindemittelsystem dienen, indem sie mit geeigneten Komponenten des Bindmittelsystems reagieren.

Sofern vorhanden, beträgt die Menge der Monomere (C4) in der Regel 0,1 bis 25 Gew. %, bezogen auf die Gesamtmenge aller monomeren Baueinheiten in Copolymer (C). Bevorzugt beträgt die Menge 1 bis 15 Gew. %, besonders bevorzugt 2 bis 10 Gew. % und ganz besonders bevorzugt 3 bis 7 Gew. %.

Bei den Monomeren (C4) kann es sich auch um vernetzend wirkende Monomere mit zwei oder mehreren isolierten ethylenisch ungesättigen Doppelbindungen handeln. Beispiele umfassen Di- bzw. Poly(meth)acrylate wie Ethylenglykoldi(meth)acrylat oder Butandiol-1,4-di(meth)acrylat, Di-, Tri- oder Tetraethylenglykoldi(meth)acrylat oder Trimethylolpropantri(meth)acrylat. Die Copolymere (C) sollten aber nicht zu stark vernetzt werden. Falls vernetzende Monomere anwesend sind, sollte deren Menge in der Regel 4 Gew. % bezüglich der Summe aller Monomerer, bevorzugt 3 Gew. % und besonders bevorzugt 2 Gew. % nicht überschreiten.

### Herstellung der Copolymere (C)

Die Herstellung der erfindungsgemäß verwendeten Copolymere (C) wird bevorzugt mittels radikalischer Polymerisation vorgenommen. Die Durchführung einer radikalischen Polymerisation einschließlich dazu notwendiger Apparaturen ist dem Fachmann prinzipiell bekannt. Die Polymerisation wird bevorzugt unter Verwendung thermisch zerfallender Polymerisationsinitiatoren durchgeführt werden. Bevorzugt können Peroxide als thermische Initiatoren verwendet werden. Die Polymerisation kann aber selbstverständlich auch photochemisch vorgenommen werden.

Als Lösemittel können bevorzugt Monoalkohole eingesetzt werden. Beispiele geeigneter Monoalkohole umfassen C1- bis C8-Alkoxyalkohole und insbesondere 2-Butoxyethanol (Butylglycol) sowie 2-Butoxy-propanol.

Weiterhin bevorzugt sind Alkansäurealkylester, Alkansäurealkylesteralkohole, alkoxylierte Alkansäurealkylester und deren Gemische.

Ester sind beispielsweise n-Butylacetat, Ethylacetat, 1-Methoxypropylacetat-2 und 2-Methoxyethylacetat, sowie die Mono- und Diacetylester von Ethylenglykol, Diethylenglykol, Triethylenglykol, Propylenglykol, Dipropylenglykol oder Tripropylenglykol, wie beispielsweise Butylglykolacetat.

Ether sind beispielsweise Tetrahydrofuran (THF), Dioxan sowie die Dimethyl-, -ethyloder -n-butylether von Ethylenglykol, Diethylenglykol, Triethylenglykol, Propylenglykol, Dipropylenglykol oder Tripropylenglykol.

Alkansäureesteralkohole sind beispielsweise Poly-(C₂ bis C₃) alkylenglykol-(C₁ bis C₄)monoalkylether acetate.

Etheralkohole sind besipielsweise Poly-(C₂ bis C₃) alkylenglykol-di-(C₁ bis C₄)alkylether, Dipropylenglykoldimethylether, bevorzugt Butylglykol.

Weiterhin denkbar sind auch Carbonate, wie bevorzugt 1,2-Ethylencarbonat, 1,2-Propylencarbonat oder 1,3-Propylencarbonat.

Die radikalische Polymerisation mit thermischen Initiatoren kann bei 50 bis 200°C, bevorzugt 60 bis 180°C, besonders bevorzugt bei 80 bis 200°C und insbesondere bei 100 bis 170°C vorgenommen werden. Die Menge an Initiator beträgt 0,1 bis 15 Gew. % bzgl. der Menge der Monomeren, bevorzugt 3 bis 12 Gew. % und besonders bevorzugt 5 bis 9 Gew. %. In der Regel ist eine Menge von etwa 6 Gew. % empfehlenswert. Die Polymerisationsdauer beträgt üblicherweise 1 bis 40 h, bevorzugt 3 bis 25 h und besonders bevorzugt 5 bis 15 h. Falls erforderlich, können die Copolymere nach dem Fachmann bekannten Methoden aus dem Lösemittel isoliert werden.

Die sauren Gruppen des Polymers können vor, während oder nach der Polymerisation auch ganz oder bevorzugt teilweise neutralisiert werden.

Beispiele geeigneter Basen zum Neutralisieren umfassen insbesondere lineare, cyclische und/oder verzweigte C₁ - C₈-Mono-, Di- und Trialkylamine, lineare oder verzweigte C₁ - C₈-Mono-, Di- oder Trialkanolamine, inbesondere Mono-, Di- oder Trialkanoamine, lineare oder verzweigte C₁ - C₈-Alkylether linearer oder verzweigter C₁ - C₈-Mono-, Di- oder Trialkanolamine, Oligo- und Polyamine wie beispielsweise Diethylentriamin.

Wird die Neutralisierung vor oder während der Polymerisation vorgenommen, so richtet sich die optimale Menge an Base nach dem jeweils eingesetzten sauren Monomer. Durch den Neutralisierungsgrad kann man die Polymerisation so steuern, dass man den optimalen Restmonomerengehalt erhält. Die Neutralisierung wird bevorzugt nach der Polymerisation vorgenommen.

Die erhaltenen organischen Lösungen der modifizierten Copolymere können direkt zur Formulierung organischer vernetzbarer Zubereitungen eingesetzt werden. Selbstverständlich kann das Polymer hieraus aber auch nach dem Fachmann bekannten Methoden isoliert werden. Da es sich bei den erhaltenen Produkten um Lösungen handelt und nicht, wie beispielsweise in der JP 55-066940 um Hydrosole, also dispergierte Partikel, sind diecopolymere nach der vorliegenden Erfindung leichter in Beschichtungsmassen einarbeitbar als dispergierte Partikel.

Zur Einarbeitung in wässrige Formulierungen kann der Lösung zweckmäßigerweise Wasser zugesetzt und das organische Lösungsmittel mittels dem Fachmann bekannter Methoden abgetrennt werden.

Das Molekulargewicht M_{w} des Copolymers wird vom Fachmann je nach dem gewünschten Verwendungszweck gewählt. Bewährt hat sich ein M_{w} von 3000 g/mol bis 1 000 000 g/mol, bevorzugt 4000 bis 200 000 g/mol und besonders bevorzugt 5000 bis 100 000 g/mol.

### Verfahren zum Aufbringen von Korrosionsschutzschichten

Mittels des erfindungsgemäßen Verfahrens können im Prinzip beliebige metallische Körper vor Korrosion geschützt werden, indem man die metallische Oberfläche mit einer Zubereitung umfassend mindestens ein härtbares und/oder vernetzbares Bindemittelsystem (A), eine Komponente (B), ausgewählt aus der Gruppe von feinteiligen Füllstoffen, Pigmenten oder Farbstoffen sowie ein Copolymer (C) behandelt. Die Formulierung kann weiterhin optional noch ein Lösemittel oder ein Lösemittelsystem (D) umfassen, in dem die Komponenten gelöst bzw. dispergiert sind. Bevorzugt ist ein Lösemittel vorhanden.

Es können im Prinzip alle Arten von Metallen beschichtet werden. Bevorzugt handelt es sich aber um unedle Metalle oder Legierungen, welche üblicherweise als metallische Konstruktionswerkstoffe eingesetzt werden, und die vor Korrosion geschützt werden müssen. Beispiele umfassen insbesondere Eisen, Stahl, Zink, Zinklegierungen, Aluminium oder Aluminiumlegierungen.

Bindemittelsysteme (A), Komponenten (B) sowie geeignete Lösemittel zum Formulieren von Korrosionsschutzformulierungen sind dem Fachmann bekannt. Er trifft je nach den gewünschten Eigenschaften der Schicht eine geeignete Auswahl. Das Beschichten der Oberfläche kann mittels üblicher, dem Fachmann geläufiger Techniken erfolgen, bevorzugt durch Aufspritzen oder Streichen.

Je nach Art der metallischen Oberfläche bzw. des metallischen Körpers kommen vor allem zwei verschiedene bevorzugte Ausführungsformen des erfindungsgemäßen Verfahrens in Frage.

### Atmosphärischer Korrosionsschutz

Bei der Erfindung handelt es sich bei dem Verfahren zum Aufbringen von Korrosionsschutzschichten im atmosphärischen Korrosionsschutz.
Bei den metallischen Oberflächen, die mittels des Verfahrens zum atmosphärischen Korrosionsschutz geschützt werden können, kann es sich prinzipiell um beliebige Oberflächen handeln. Bevorzugt handelt es sich aber um die Oberflächen von metallischen Bauwerken oder Metallkonstruktionen bzw. den dazu benötigten Bauteilen. Metallkonstruktionen bzw. Bauwerke werden üblicherweise aus Baustahl, wie Stahlträgern, Stahlrohren oder Stahlblechen durch Nieten, Schweißen oder Schrauben zu entsprechenden Konstruktionen verbunden. Die Oberflächen können hierbei während des Gebrauchs in Kontakt mit atmosphärischer Luft stehen, es kann sich aber auch um Oberflächen handeln, die während des Gebrauchs in Kontakt mit Wasser, Erdreich oder anderen korrosiven Medien stehen. Bei den metallischen Oberflächen, die mittels des erfindungsgemäßen Verfahrens vor Korrosion geschützt werden sollen kann es sich prinzipiell um beliebige Oberflächen handeln. Bevorzugt handelt es sich aber um die Oberflächen von metallischen Bauwerken oder Metallkonstruktionen bzw. den dazu benötigten Bauteilen. Metallkonstruktionen bzw. Bauwerke werden üblicherweise aus Baustahl, wie Stahlträgern, Stahlrohren oder Stahlblechen durch Nieten, Schweißen oder Schrauben zu entsprechenden Konstruktionen verbunden. Bei einer Ausführungsform der Erfindung kann es sich bei den beschichteten Gegenständen um immobile metallische Konstruktionen wie beispielsweise Gebäude, Brücken, Strommasten, Tanks, Container, Gebäude, Pipelines, Kraftwerke, chemische Anlagen, Schiffe, Kräne, Pfähle, Spundwände, Armaturen, Rohre, Tanks, Fittings, Flansche, Kupplungen, Hallen, Dächer und Baustahl handeln. Bei dieser Ausführungsform werden Korrosionsschutzbeschichtungen üblicherweise an Ort und Stelle aufgestrichen oder aufgespritzt. Dabei kann es sich sowohl um einen Erstsschutz oder um eine Instandsetzung handeln.

Insbesondere handelt es sich um die Oberflächen von Eisen, Stahl, Zink, Zinklegierungen, Aluminium oder Aluminiumlegierungen. Stahl kann die üblichen, dem Fachmann bekannten Legierungskomponenten enthalten.

Beispiele geeigneter Legierungsbestandteile für Zn- oder Aluminiumlegierungen wurden bereits oben genannt. Zn- oder Aluminiumbeschichtungen können auf Stahl beispielsweise durch Schmelztauchverfahren, z.B. Feuerverzinken, oder durch Sherardisieren aufgebracht werden. Sofern das Bauteil immobil ist oder die Bauteilgeometrie es nicht zulässt, können entsprechende Schichten auch mittels thermischem Spritzen (Spritzverzinken, Spritzaluminieren) aufgebracht werden.

Beim atmosphärischen Korrosionsschutz werden Korrosionsschutzbeschichtungen üblicherweise an Ort und Stelle aufgestrichen oder aufgespritzt. Die Trocknung und Härtung derartiger Korrosionsschutzbeschichtungen erfolgt in der Regel unter atmosphärischen Bedingungen, also etwa bei Umgebungstemperatur sowie in Gegenwart von Luft bzw. Luftsauerstoff und üblicher Luftfeuchtigkeit. Je nach dem erforderlichen Schutzgrad wird der Korrosionsschutz von Oberflächen durch Korrosionsschutzanstriche auch als leichter, mittlerer oder schwerer Korrosionsschutz bezeichnet.

Besonders bevorzugt kann das Verfahren zum atmosphärischen Korrosionsschutz für solche metallischen Oberflächen eingesetzt werden, die einer Korrosionsbelastung der Korrosivitätskategorien C2 (gemäß DIN EN ISO 12944) oder höher ausgesetzt sind, bevorzugt Korrosivitätskategorien C3 oder höher und besonders bevorzugt Korrosivitätskategorien C4 oder höher.

Dabei werden die Korrosivitätskategorien gemäß DIN EN ISO 12944 durch den flächenbezogenen Massenverlust bzw. die Dickenabnahme von unlegiertem Stahl bzw. bei Zink definiert, deren Oberflächen 1 Jahr lang einer bestimmten korrosiven Belastung ausgesetzt sind:

| | | |
|---|---|---|
| C2 (gering korrosiv): | unlegierter Stahl: | Massenverlust > 10 - 200 g/m² |
| | | Dickenabnahme > 1,3 - 25 µm |
| | Zink: | Massenverlust > 0,7 - 5 g/m² |
| | | Dickenabnahme > 0,1 - 0,7 µm |
| | | |
| C3 (mäßig korrosiv): | unlegierter Stahl: | Massenverlust > 200 - 400 g/m² |
| | | Dickenabnahme > 25 - 50 µm |
| | Zink: | Massenverlust > 5 - 15 g/m² |
| | | Dickenabnahme > 0,7 - 2,1 µm |
| | | |
| C4 (stark korrosiv): | unlegierter Stahl: | Massenverlust > 400 - 650 g/m² |
| | | Dickenabnahme > 50 - 80 µm |
| | Zink: | Massenverlust > 15 - 30 g/m² |
| | | Dickenabnahme > 2,1 - 4,2 µm |
| | | |
| C5-I/M (sehr stark): | unlegierter Stahl: | Massenverlust > 650 - 1500 g/m² |
| | | Dickenabnahme > 80 - 200 µm |
| | Zink: | Massenverlust > 30 - 60 g/m² |
| | | Dickenabnahme > 4,2 - 8,4 µm |

Besonders bevorzugt werden die erfindungsgemäßen Zubereitungen in Korrosionsschutzmitteln verwendet, die in Korrosivitätskategorien C2 (gemäß DIN EN ISO 12944) oder höher eingesetzt werden, bevorzugt in Korrosivitätskategorien C3 oder höher und besonders bevorzugt in Korrosivitätskategorien C4 oder höher.

Beim vorliegenden Verfahren handelt es sich bevorzugt um ein chrom(VI)freies Verfahren, besonders bevorzugt um ein chromfreies Verfahren. Der Begriff "chrom(VI)frei" bzw. "chromfrei" im Sinne dieser Erfindung bedeutet, dass die eingesetzte Zubereitung selbst keine Chrom(VI)-Verbindungen bzw. überhaupt keine Chromverbindungen enthält, und dass auch keine korrosionshemmende Vorbehandlung der Metalloberfläche mit Chrom(VI)-Verbindungen bzw. Chromverbindungen durchgeführt wird. Dies schließt selbstverständlich nicht aus, dass sich -an sich unbeabsichtigt- Spuren von Chrom in der Schicht befinden können. Hierbei kann es sich beispielsweise um Chromspuren handeln, die im Zuge der Beschichtung eines chromhaltigen Stahles aus dem Stahl herausgelöst werden.

Zur Ausführung des erfindungsgemäßen Verfahrens zum atmosphärischen Korrosionsschutz wird erfindungsgemäß eine Zubereitung eingesetzt, welche mindestens ein unter atmosphärischen Bedingungen härtbares Bindemittelsystem (A), mindestens eine Komponente (B) ausgewählt aus der Gruppe von feinteiligen Füllstoffen, Pigmenten oder Farbstoffen, mindestens ein Copolymer (C), sowie mindestens ein Lösemittels (D) umfasst.

### Bindemittelsystem (A)

Bei den unter atmosphärischen Bedingungen härtbaren Bindemittelsystemen (A) kann es sich um die auf dem Gebiet der Korrosionsschutzanstriche und Beschichtungen üblichen Bindemittelsysteme handeln. Derartige Bindemittel bzw. Bindemittelsysteme sind dem Fachmann prinzipiell bekannt. Selbstverständlich können auch Mischungen verschiedener Bindemittelsysteme eingesetzt werden, vorausgesetzt es treten durch die Mischung keine unerwünschten Effekte auf.

Der Begriff "Bindemittelsystem" bezeichnet im Folgenden in prinzipiell bekannter Art und Weise diejenigen Anteile der Formulierung, die für die Filmbildung verantwortlich sind.

Der Begriff "atmosphärischer Korrosionsschutz" bedeutet im Rahmen dieser Erfindung, dass die Korrosionsschutzbeschichtung eine Schichtdicke nach Trocknung von mindestens 40 µm, bevorzugt mindestens 50 µm, besonders bevorzugt mindestens 60 µm und ganz besonders bevorzugt mindestens 80 µm und eine Schichtdicke bis zu 2 mm, bevorzugt weniger als 1,5 mm, besonders bevorzugt weniger als 1 mm, ganz besonders bevorzugt weniger als 800 µm und insbesondere weniger als 500 µm, wobei die Beschichtungsmasse nach dem Aufbringen auf die Oberfläche unter üblichen Umgebungsbedingungen, d.h. etwa bei Umgebungs- oder bei Raumtemperatur, in Gegenwart von Luft sowie üblicher Luftfeuchtigkeit ohne die Verwendung zusätzlicher Apparaturen oder Einrichtungen auszuhärten. Typische Härtungstemperaturen betragen je nach der Umgebung mehr als 0 bis 40°C, bevorzugt 5 bis 35°C, besonders bevorzugt 10 bis 30 °C und ganz besonders bevorzugt 15 bis 25°C in Gegenwart von Luft und üblicher Luftfeuchtigkeit. Die relative Luftfeuchtigkeit kann beliebig sein, bevorzugt beträgt sie zwischen 10 und 80% und besonders bevorzugt zwischen 30 und 70 %. Es ist für den Fachmann klar, dass die Zeit bis zum vollständigen Härten ein und desselben Bindemittelsystems je nach den tatsächlich herrschenden Umgebungsbedingungen unterschiedlich sein kann.

Je nach der Art des eingesetzten Bindemittelsystems kann die Härtung nach verschiedenen Mechanismen verlaufen. Beispielsweise kann es sich um eine rein physikalische Härtung, verursacht durch das Verdunsten des verwendeten Lösemittels handeln. Es kann sich weiterhin um eine oxidative Härtung durch Reaktion des Bindemittelsystems mit dem Sauerstoff der Luft handeln. Schließlich kann es sich auch um eine chemische Vernetzung (Reaktivvernetzung) handeln. Reaktive Bindemittelsysteme umfassen vernetzbare Komponenten. Die vernetzbaren Komponenten können niedermolekular, oligomer oder polymer sein. Es kann sich hierbei bevorzugt um 1 K- oder auch um 2 K-Systeme handeln. Reaktiv vernetzende Systeme umfassen auch feuchtigkeitshärtende Bindemittelsysteme, bei denen die Luftfeuchtigkeit als Härterkomponente fungiert. Selbstverständlich kann ein Bindemittelsystem auch durch eine Kombination verschiedener Härtungsverfahren aushärten. Bei 2-K-Systemen werden die Binder- und die Härterkomponente in prinzipiell bekannter Art und Weise vor dem Verwenden der Formulierung gemischt.

Zur Ausführung der Erfindung können wasserverdünnbare oder organisch lösliche Bindemittelsysteme eingesetzt werden. Bevorzugt handelt es sich um Bindemittelsysteme auf wässriger Basis.

Bindemittelsysteme für Korrosionsschutzbeschichtungen, insbesondere Korrosionsschutzsysteme auf wässriger Basis sind dem Fachmann prinzipiell bekannt. Es kann sich beispielsweise um Epoxyharze, Polyacrylate, Styrol-Acrylat-Polymere, Polyester, Alkydharze, Polyurethane der Styrol-Butadien-Polymere handeln.

Die Menge der Bindemittel (A) in der Formulierung beträgt 15 bis 70 Gew. %, bezogen auf die Menge aller Komponenten der Formulierung einschließlich des Lösemittels. Sie wird vom Fachmann je nach den gewünschten Eigenschaften der Beschichtung festgelegt. Bevorzugt beträgt die Menge 20 bis 60 Gew. % und besonders bevorzugt 25 bis 50 Gew. %.

Bevorzugte Bindemittelsysteme zur Ausführung der Erfindungen sind nachfolgend beschrieben.

### Polyacrylate bzw. Styrol-Acrylat-Copolymere (A1)

In einer bevorzugten Ausführungsform der Erfindung handelt es sich bei dem Bindemittelsystem um eine wässrige oder überwiegend wässrige Dispersion von Polyacrylaten bzw. Styrol-Acrylat-Copolymeren (A1).

Wässrige Dispersionen von Polyacrylaten bzw. Styrol-Acrylat-Copolymeren (A1) zur Herstellung von Korrosionsschutzanstrichen sind dem Fachmann prinzipiell bekannt. Bei den wässrigen Dispersionen der Polyacrylate (A1) kann es sich sowohl um Primärdispersionen wie um Sekundärdispersionen handeln. Geeignete Polyacrylate enthalten als Hauptmonomere mindestens ein Alkyl(meth)acrylat wie beispielsweise Methyl-(meth)acrylat, Ethyl(meth)acrylat, Butyl(meth)acrylat oder 2-Ethylhexyl(meth)acrylat. Sie können bevorzugt als weitere Hauptmonomere Vinylaromaten, insbesondere Styrol aufweisen. Die Menge der Hauptmonomeren zusammen beträgt in der Regel mindestens 60 Gew. %, bevorzugt mindestens 80 Gew. %. Styrol-Acrylat-Copolymere umfassen neben den genannten Alkyl(meth)acrylaten als Hauptmonomer in der Regel mindestens 30 Gew. %, bevorzugt mindestens 40 Gew. % und besonders bevorzugt etwa 50 Gew. % Styrol. Die Polyacrylate bzw. Styrol-Acrylat-Copolymere (A1) können daneben noch weitere Comonomere aufweisen, insbesondere solche mit funktionellen Gruppen wie Hydroxy-, Carboxy- oder Carboxamidgeruppen. Beispiele umfassen (Meth)acrylsäure, Itaconsäure, Maleinsäure, Fumarsäure, (Meth)acrylamid oder Hydroxyalkyl(meth)acrylate. Bevorzugt handelt es sich bei weiteren Comonomeren um saure Comonomere. Weiterhin können optional auch noch vernetzenende Monomere in geringen Mengen, üblicherweise weniger als 4 Gew. %, bevorzugt weniger als 2 Gew. %, anwesend sein. Beispiele umfassen Butandiol(meth)acrylat, Hexandioldi(meth)acrylat oder Allylacrylat.

Polyacrylate (A1) können in prinzipiell bekannter Art und Weise mittels Emulsionspolymerisation hergestellt werden. Weitere Einzelheiten zu derartigen Polymeren sowie deren Herstellung sind beispielsweise in EP-A 157 133, WO 99/46337, oder in "Paints and Coatings, 2.5. Acrylic Coatings" in Ullmann's Encyclopedia of Technical Chemistry, 6th Edition 2000, Electronic Release offenbart. Der Fachmann trifft unter den prinzipiell möglichen Polyacrylaten (A1) je nach den gewünschten Eigenschaften der Schicht eine geeignete Auswahl.

Zur Ausführung der Erfindung insbesondere geeignet sind Styrol-Acrylat-Copolymere, welche als Hauptmonomere mindestens ein elastomeres Acrylat wie beispielsweise n-Butyl(meth)acrylat, n-Hexyl(meth)acrylat, n-Octylacrylat oder 2-Ethylhexyl(meth)acrylat im Gemisch mit Styrol sowie als Nebenmonomer mindestens ein saures Monomer, wie beispielsweise (Meth)acrylsäure umfassen. Zur Verwendung als Bindemittel für die Formulierung können die Säuregruppen ganz oder teilweise mit geeigneten Basen wie beispielsweise Ammoniak neutralisiert werden.

Die eingesetzten Polyacrylate sollten in der Regel eine Glasübergangstemperatur T_{g} im Bereich von 0 bis 60°C, bevorzugt im Bereich von 5 bis 40°C aufweisen (gemessen nach der DSC-Methode nach DIN EN ISO 11357). Die Glasübergangstemperatur kann vom Fachmann in prinzipiell bekannter Art und Weise durch die Auswahl und das mengenverhältnis von Hart- und Weichmonomeren gewählt werden.

Bevorzugt zur Ausführung der Erfindung können weiterhin Polyacrylate (A1) mit einer mittleren Teilchengröße von 50 nm bis 400 nm, besonders bevorzugt 80 nm bis 250 nm eingesetzt werden (gemessen mit dem Malvern^{®} Autosizer 2 C).

Geeignete Acrylat- bzw. Styrol-Acrylat-Dispersionen zur Herstellung von Korrosionsschutzanstrichen sind kommerziell erhältlich, beispielsweise als Acronal^{®} S 760 oder Acronal^{®} LR 8977 (Fa. BASF Aktiengesellschaft) oder Acronal^{®} Optive 410 (Fa. BASF Corporation).

### Styrol-Alkadien-Polymere (A2)

In einer zweiten, bevorzugten Ausführungsform der Erfindung handelt es sich bei dem Bindemittelsystem um eine wässrige oder überwiegend wässrige Dispersion von Styrol-Alkadien-Polymeren (A2).

Wässrige Dispersionen von Styrol-Alkadien-Polymeren (A2) zur Herstellung von Korrosionsschutzanstrichen sind dem Fachmann prinzipiell bekannt und beispielsweise in EP-A 47380 beschrieben. Es kann es bevorzugt um Primärdispersionen aber auch um Sekundärdispersionen handeln.

Geeignete Polymere (A2) umfassen als Hauptmonomere Styrol sowie mindestens ein konjugiertes aliphatisches Dien (Alkadien). Bei den Alkadienen kann es sich beispielsweise um Butadien, Isopren, 1,3-Pentadien oder Dimethylbutadien handeln. Das Styrol kann auch noch mit Alkylgruppen substituiert sein. Beispiele umfassen α-Methylstyrol oder 4-Methylstyrol. Bevorzugt handelt es sich bei den Hauptmonomeren um Styrol und Butadien. In der Regel enthalten die Polymere zumindest 20 Gew. % Styrol und 20 Gew. % Alkadiene, wobei die Menge der Hauptmonomere zusammen in der Regel mindestens 60 Gew. %, bevorzugt mindestens 80 Gew. % beträgt. Die Mengenangaben beziehen sich jeweils auf die Summe aller Monomere. Sie können darüber hinaus noch weitere Comonomere aufweisen. Zu nennen sind hier einerseits ethylenisch ungesättige Carbonsäuren und/oder Discarbonsäuren wie beispielsweise (Meth)acrylsäure, Maleinsäure oder Itaconsäure. Weiterhin kann es sich um ethylenisch ungesättigte Carbonsäurenitrile wie (Meth)acrylnitril sowie Alkyl(meth)acrylate wie Methyl-(meth)acrylat, n-Butyl(meth)acrylat, n-Hexyl(meth)acrylat, n-Octylacrylat oder 2-Ethylhexyl(meth)acrylat handeln.

Styrol-Alkadien-Polymere (A2) können in prinzipiell bekannter Art und Weise mittels Emulsionspolymerisation hergestellt werden. Weitere Einzelheiten zu Styrol-Butadien-Polymeren für Beschichtungsstoffe sowie deren Herstellung sind beispielsweise in "Paints and Coatings, 2.4.8. Polystyrene and Styrene Copolymers" in Ullmann's Encyclopedia of Technical Chemistry, 6th Edition 2000, Electronic Release offenbart.

Zur Ausführung der Erfindung insbesondere geeignet sind Styrol-Butadien-Polymere, welche als Nebenmonomer ein oder mehrere saure Monomere, wie beispielsweise (Meth)acrylsäure umfassen, bevorzugt in einer Menge von 0,5 bis 5 Gew. %. Zur Verwendung als Bindemittel für die Formulierung können die Säuregruppen bevorzugt ganz oder teilweise mit geeigneten Basen wie beispielsweise Ammoniak neutralisiert werden.

Die eingesetzten Styrol-Butadien-Polymere (A2) sollten in der Regel eine Glasübergangstemperatur T_{g} im Bereich von 0 bis 60°C, bevorzugt im Bereich von 5 bis 40°C aufweisen. Die Glasübergangstemperatur kann vom Fachmann in prinzipiell bekannter Art und Weise durch die Auswahl und das Mengenverhältnis von Hart- und Weichmonomeren gewählt werden.

Bevorzugt zur Ausführung der Erfindung können weiterhin Styrol-Butadien-Polymere (A2) mit einer mittleren Teilchengröße von 50 nm bis 400 nm, besonders bevorzugt 80 nm bis 250 nm eingesetzt werden (wie oben gemessen).

### Polyurethane (A3)

In einer dritten, bevorzugten Ausführungsform der Erfindung handelt es sich bei dem Bindemittelsystem um eine wässrige oder überwiegend wässrige Dispersion von Polyurethanen (A3).

Wässrige Dispersionen von Polyurethanen (A3) zur Herstellung von Korrosionsschutzanstrichen sind dem Fachmann prinzipiell bekannt. Einzelheiten zu Polyurethanen für Beschichtungsstoffe sowie deren Herstellung sind beispielsweise in "Paints and Coatings, 2.9 Polyurethane Coatings in "Ullmann's Encyclopedia of Technical Chemistry, 6th Edition 2000, Electronic Release offenbart. Bei den wässrigen Dispersionen der Polyurethanen (A3) kann es sich sowohl um Primärdispersionen wie um Sekundärdispersionen handeln.

Polyurethane für wässrige Dispersionen können in prinzipiell bekannter Art und Weise aus üblichen Diisocyanaten sowie Diolen aufgebaut werden. Im Hinblick auf gute Filmbildung und Elastizität kommen hierzu insbesondere Diole mit einem zahlenmittleren Molekulargewicht Mₙ von etwa 500 bis 5000 g/mol, bevorzugt etwa 1000 bis 3000 g/mol in Frage. Hierzu können sowohl Polyether- wie Polyesterdiole eingesetzt werden. Die Menge derartiger Diole mit höherem Molekulargewicht beträgt üblicherweise 10 bis 100 mol % bezüglich der Summe aller Diole. Die gewünschte Härte und Elastizität des Films lässt sich steuern, indem man neben dem bereits genannten Diol noch niedermolekulare Diole mit einem zahlenmittleren Molekulargewicht Mₙ von etwa 60 bis 500 g/mol einsetzt.

Zum Aufbau von Polyurethanen für wässrige Dispersionen werden darüber hinaus Monomere eingesetzt, welche wenigstens eine Isocyanatgruppe oder eine gegenüber Isocyanatgruppen reaktive Gruppe sowie zusätzlich mindestens eine hydrophile Gruppe umfassen. Hierbei kann es sich um nichtionische Gruppen wie beispielsweise Polyoxyethylengruppen, um saure Gruppen wie COOH-, Sulfonat- oder Phosphonatgruppen oder um basische Gruppen wie Aminogruppen handeln. Bevorzugt handelt es sich um saure Gruppen. Zur Verwendung als Bindemittel für die Formulierung können die Säuregruppen bevorzugt ganz oder teilweise mit geeigneten Basen neutralisiert werden. Bevorzugt hierzu sind Ammoniak oder Amine. Weitere Einzelheiten zu derartigen Polyurethandispersionen sowie deren Herstellung sind in WO 2005/005565, Seite 4, Zeile 13 bis Seite 14, Zeile 14 ausführlich beschrieben. Weitere Beispiele geeigneter Polyurethane sind in US 5,707,941 oder in WO 2004/101638, insbesondere Seite 2, Zeile 31 bis Seite14, Zeile 11 offenbart.

Es kann sich auch um modifizierte Polyurethane handeln. Beispielsweise kann es sich um oxidativ härtende Urethanalkyde handeln. Zur Herstellung können beispielsweise Triglyceride ungesättigter Fettsäuren teilweise hydrolysiert werden. Die entstehende OH-Gruppe kann bei der Polyurethanherstellung mit den Isocyanatgruppen reagieren.

Bevorzugt zur Ausführung der Erfindung können weiterhin Polyurethane (A3) mit einer mittleren Teilchengröße von nicht mehr als 1000 nm, bevorzugt weniger als 500, besonders bevorzugt weniger als 200 nm, und insbesondere 20 bis 200 nm eingesetzt werden.

### Alkydharze (A4)

In einer vierten, bevorzugten Ausführungsform der Erfindung handelt es sich bei dem Bindemittelsystem um eine wässrige oder überwiegend wässrige Dispersion von Alkydharzen (A4).

Wässrige Dispersionen von Alkydharzen (A4) zur Herstellung von Korrosionsschutzanstrichen sind dem Fachmann prinzipiell bekannt. Bei Alkydharzen (A4) handelt es sich um oxidativ härtende Polykondensationsharze aus Polyolen und mehrwertigen Carbonsäuren, bei denen mindestens eine OH-Gruppe des Polyols mit fetten Ölen und/oder natürlichen und/oder synthetischen einfach oder mehrfach ungesättigten Fettsäuren verestert ist, wobei mindestens eines der eingesetzten Polyole tri- oder höherfunktionell sein muss.

Beispiele bevorzugter mehrwertiger Alkohole umfassen Glycerin, Pentaerythrit, Trimethylolethan, Trimethylolpropan, verschiedene Diole wie Ethan-/Propandiol, Diethylenglykol, Neopentylglykol.

Bevorzugte mehrwertige Carbonsäuren sind Phthalsäure(anhydrid) (PSA), Isophthalsäure, Terephthalsäure, Trimellitsäureanhydrid, Adipinsäure, Azelainsäure, Sebacinsäure, besonders bevorzugt ist Phthalsäure(anhydrid).

Als Ölkomponente bzw. Fettsäure kommen beispielsweise trocknende Öle, wie Leinöl, Oiticicaöl oder Holzöl, halbtrocknende Öle, wie Sojaöl, Sonnenblumenöl, Safloröl, Ricinenöl oder Tallöl, nicht-trocknende Öle, wie Ricinusöl, Kokosöl oder Erdnußöl oder freie Fettsäuren obiger Öle in Betracht.

Die Molmasse Mₙ typischer Alkydharze liegt zwischen 1500 und 20000 g/mol, bevorzugt zwischen 3500 und 6000 g/mol. Die Säurezahl beträgt bevorzugt 2 bis 30 mg KOH/g, bei wasserverdünnbaren Harzen auch 35-65 mg KOH/g. Die OH-Zahl beträgt in der Regel bis zu 300, bevorzugt bis zu 100 mg KOH/g.

Der Begriff "Alkydharze" soll auch modifizierte Alkydharze wie styrolmodifizierte Alkydharze, Urethanalkyde, Urethanöle oder epoxyharzmodifizierte Alkydharze umfassen. Derartige modifizierte Alkydharze sind dem Fachmann bekannt.

Weitere Einzelheiten zu Alkydharzen (A4) für Beschichtungsstoffe sowie deren Herstellung sind beispielsweise in "Paints and Coatings, 2.6. Alkyd Coatings" in Ullmann's Encyclopedia of Technical Chemistry, 6th Edition 2000, Electronic Release sowie in "Lackformulierung und Lackrezeptur", Hrsg. Ulrich Zorll, S. 188 ff, Curt R. Vinzentz Verl., Hannover, 2003 offenbart.

Die eingesetzten Alkydharze (A4) sollten in der Regel eine Glasübergangstemperatur T_{g} im Bereich von 0 bis 60°C, bevorzugt von 5 bis 40°C aufweisen.

### Füllstoff / Pigment /Farbstoff (B)

Die erfindungsgemäß verwendete Zubereitung umfasst weiterhin mindestens eine Komponente (B) ausgewählt aus der Gruppe von feinteiligen Füllstoffen, Pigmenten oder Farbstoffen.

Bei dem feinteiligen Füllstoff handelt es sich in der Regel um einen anorganischen Füllstoff. Füllstoffe und/oder Pigmente können selbstverständlich eine zusätzliche organische Beschichtung, beispielsweise zur Hydrophobierung oder Hydrophilierung umfassen.

Der Füllstoff sollte eine durchschnittliche Partikelgröße von 10 µm nicht überschreiten. Bevorzugt beträgt die durchschnittliche Partikelgröße 10 nm bis 8 µm, besonders bevorzugt 100 nm bis 5 µm und beispielsweise 2 bis 4 µm. Bei runden oder annähernd runden Partikeln bezieht sich diese Angabe auf den Durchmesser, bei unregelmäßig geformten, wie bspw. bei nadelförmigen Partikeln auf die längste Achse. Mit der Partikelgröße ist die Primärpartikelgröße gemeint. Dem Fachmann ist selbstverständlich bekannt, dass sich feinteilige Feststoffe häufig zu größeren Partikel agglomerieren, die zur Verwendung intensiv dispergiert werden müssen. Die Partikelgröße wird vom Fachmann je nach den gewünschten Eigenschaften der Schicht gewählt.

Bei den Pigmenten kann es sich insbesondere um Korrosionsschutzpigmente handeln. Es kann sich sowohl um aktive wie um passive Korrosionsschutzpigmente handeln.

Beispiele von aktiven Korrosionsschutzpigmenten umfassen insbesondere Phosphate, phosphathaltige oder modifizierte Phosphate wie Pigmente auf Basis von Zinkphosphat, Zinkaluminiumorthophosphat, Zink-Molybdän-Orthophosphat, Zink-Aluminium-Molybdän-Orthophosphat, Calciumhydrogenphosphat, Zink-Calcium-Strontium Orthophosphat-Silicat, Zink-Aluminium-Polyphosphat, Strontium-Aluminium-Polyphosphat, Zink-Calcium-Aluminium-Strontium-Orthophosphat-Polyphosphat-Silikat, Calcium-Aluminium-Polyphosphat-Silikat. Weitere Beispiele umfassen Kombinationen anorganischer Phosphate mit schwerlöslichen, elektrochemisch aktiven organischen Korrosionsinhibitoren wie mit Zn- oder Ca-Salzen von 5-Nitroisophthalsäure modifiziertes Zinkphosphat. Weiterhin können auch Eisenphosphid, Zinkhydroxyphosphid, Borosilikat-Pigmente wie Bariummetaborat oder Zinkborophosphate, Molybdate wie Zinkmolybdat, Natriumzinkmolybdate oder Calciummolybdat, Pigmente mit ionenaustauschenden Eigenschaften wie mit Calcium-Ionen modifiziertes amorphes SiO₂ oder entsprechend modifizierte Silikate, Metalloxide wie beispielsweise ZnO oder auch Metallpulver wie beispielsweise Zinkstaub eingesetzt werden. Selbstverständlich können auch typische organische Korrosionsschutzpigmente wie bspw. Zn- oder Ca-Salze von 5-Nitroisophthalsäure eingesetzt werden.

Passive Korrosionsschutzpigmente verlängern die Diffusionswege für korrosiv wirkende Komponenten und erhöhen dadurch die Korrosionsbeständigkeit. Beispiele umfassen vor allem plättchenförmige oder lamellenförmige Pigmente wie Glimmer, Hämatit, Schichtsilikate, lineare Polysilikate wie beispielsweise Wollastonit, Talk oder Metallplättchen wie Aluminium- oder Eisenplättchen.

Weitere Einzelheiten zu Korrosionsschutzpigmenten sind beispielsweise in "Pigments, 4.2 Anticorrosive Pigments" in Ullmann's Encyclopedia of Technical Chemistry, 6th Edition 2000, Electronic Release.

Bei den Pigmenten kann es sich auch um typische Farb- und/oder Effektpigment handeln.

Unter Effektpigmenten sind alle Pigmente zu verstehen, die einen plättchenförmigen Aufbau zeigen und einer Oberflächenbeschichtung spezielle dekorative Farbeffekte verleihen. Effektpigmente sind dem Fachmann bekannt. Beispiele umfassen reine Metallpigmente, wie z.B. Aluminium-, Eisen- oder Kupferpigmente, Interferenzpigmente, wie z.B. titandioxidbeschichteter Glimmer, eisenoxidbeschichteter Glimmer, mischoxidbeschichteter Glimmer (z.B. mit Titandioxid und Fe₂O₃), metalloxidbeschichtetes Aluminium, oder Flüssigkristallpigmente.

Bei Farbpigmenten handelt es sich insbesondere um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder substantive Farbstoffe.

Mit Füllstoffen lassen sich die Eigenschaften der Beschichtung, wie beispielsweise Härte, Rheologie oder die Orientierung der Effektpigmente beeinflussen. Füllstoffe sind häufig coloristisch unwirksam; d.h. sie weisen eine geringe Eigenabsorption auf und die Brechzahl ist ähnlich der Brechzahl des Beschichtungsmediums. Beispiele für Füllstoffe umfassen Talkum, Calciumcarbonat, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-10 µm. Weiterhin können als Füllstoffe beliebige feste inerte organische Partikel, wie z.B. Harnstoff-Formaldehyd-Kondensationsprodukte, mikronisiertes Polyolefinwachs oder mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Die Komponenten (B) werden in einer Menge von 1 bis 70 Gew. % eingesetzt. Die genaue Menge wird vom Fachmann je nach den gewünschten Eigenschaften der Schicht festgelegt. Bevorzugt beträgt die Menge 5 bis 60 Gew. % und besonders bevorzugt 10 bis 50 Gew. %.

Bei der Verwendung von Pigmenten und/oder Füllstoffen haben sich dabei Pigment-Volumen-Konzentrationen (PVK) von 15 bis 40 Vol. %, bevorzugt 20 bis 40 Vol. % und besonders bevorzugt 20 bis 35 Vol % bewährt, ohne dass die Erfindung darauf beschränkt sein soll.

Die Art und Menge von Komponenten (B) werden vom Fachmann je nach dem Verwendungszweck der Schicht bestimmt. In einer besonders bevorzugten Ausführungsform der Erfindung werden keine chromhaltigen Komponenten (B) eingesetzt. Selbstverständlich können auch Gemische verschiedener Komponenten (B) eingesetzt werden.

Zum Grundierung vorgesehene Zubereitungen werden üblicherweise höher pigmentiert als zur Zwischen- oder Deckbeschichtung vorgesehene Zubereitungen.

Zur Grundierung vorgesehene Zubereitungen umfassen üblicherweise mindestens ein aktives Korrosionsschutzpigment, für Zwischenbeschichtungen vorgesehen Zubereitungen mindestens ein passives Korrosionsschutzpigment und Zubereitungen für Deckbeschichtungen mindestens ein Farbpigment und/oder einen Farbstoff.

In einer besonders bevorzugten Ausführungsform umfassen zur Grundierung vorgesehene Zubereitungen mindestens ein aktives Korrosionschutzpigment, mindestens einen Füllstoff sowie bevorzugt weiterhin mindestens ein Farbpigment.

### Copolymer (C)

Zur Herstellung der erfindungsgemäß verwendeten Zubereitung für den atmosphärischen Korrosionsschutz können ein einziges Copolymer (C) oder auch mehrere unterschiedliche Copolymere (C) eingesetzt werden. Der Fachmann trifft unter den prinzipiell möglichen Copolymeren (C) je nach den gewünschten Eigenschaften der Korrosionsschutzschicht eine bestimmte Auswahl. Für den Fachmann ist selbstverständlich, dass nicht alle Arten von Copolymeren (C) für alle Arten von Bindemittelsystemen, Lösungsmitteln oder Oberflächen gleichermaßen gut geeignet sind.

Für den atmosphärischen Korrosionsschutz können bevorzugt Copolymere (C) mit COOH- und/oder Sulfonsäuregruppen eingesetzt werden. Ganz besonders bevorzugt sind Copolymere, welche Itaconsäure als Monomer (C2) umfassen.

Die erfindungsgemäß eingesetzten Copolymere (C) werden in einer Menge von 0,1 bis 40 Gew. %, bevorzugt 0,2 bis 20 Gew. % und besonders bevorzugt 0,5 bis 10 Gew. % eingesetzt, jeweils bezogen auf die Menge aller Komponenten der Formulierung.

### Lösemittel (D)

Als Komponente (D) umfasst die Zubereitung für den atmosphärischen Korrosionsschutz ein geeignetes Lösemittel. Geeignete Lösemittel sind solche, welche in der Lage sind, die erfindungsgemäß verwendeten Komponenten zu lösen, zu dispergieren, zu suspendieren oder zu emulgieren, um einen gleichmäßigen Auftrag der Zubereitung auf die Oberfläche zu ermöglichen. Es kann sich dabei um organische Lösemittel oder um Wasser handeln. Selbstverständlich auch um Gemische verschiedener Lösemittel handeln.

Beispiele organischer Lösemittel umfassen Kohlenwasserstoffe wie Toluol, Xylol sowie insbesondere Gemische von Kohlenwasserstoffen bestimmter Siedebereiche, wie sie bei der Raffination von Rohöl erhalten werden, Ether wie THF oder Polyether wie Polyethylenglykol, Etheralkohole wie Butylglykol, Etherglykolacetate wie Butylgklykolacetat, Ketone wie Aceton, Alkohole wie Methanol, Ethanol oder Propanol.

Bevorzugt handelt es sich bei dem Lösemittel um Wasser oder ein überwiegend wässriges Lösungsmittelgemisch. Darunter sollen solche Gemische verstanden werden, die zumindest 75 Gew. %, bevorzugt mindestens 85 Gew. %, besonders bevorzugt mindestens 90 Gew. % und ganz besonders bevorzugt mindestens 95 Gew. % Wasser umfassen.

Bei weiteren Komponenten überwiegend wässriger Lösemittelgemische kann es sich um mit Wasser mischbare Lösungsmittel handeln. Beispiele umfassen insbesondere typische Colösemittel wie n-Butanol, Butylglykol, Butyldiglykol, tert.-Butylacetat, N-Methyl-2-pyrrolidon, N-Ethyl-2-pyrrolidon oder N-Cyclohexyl-2-pyrrolidon. Bei weiteren Komponenten kann es sich aber auch um mit Wasser nicht mischbare Lösemittel handeln. Derartige Lösemittel werden häufig als Filmbildehilfsmittel eingesetzt. Beispiele umfassen Butylglykolacetat, Butylglykoldiacetat oder 2,2,4-Trimethyl-1,3-pentandiol-1-isobutyrat (Texanol^{®}).

Die Menge des Lösemittels oder Lösemittelgemisches (D) beträgt 5 bis 83,9 Gew. % bezüglich der Summe aller Komponenten der Formulierung. Sie wird vom Fachmann je nach den gewünschten Eigenschaften der Anstrichformulierung bestimmt. Bevorzugt beträgt die Menge 10 bis 74,8 Gew. %, besonders bevorzugt 20 bis 64,5 Gew. % und beispielsweise 30 bis 50 Gew. %.

### Weitere Komponenten (E)

Über die Komponenten (A) bis (D) hinaus kann die erfindungsgemäß verwendete Zubereitung für den atmosphärischen Korrosionsschutz noch einen oder mehrere Hilfsstoffe und/oder Additive (E) umfassen. Derartige Hilfsstoffe und/oder Additive dienen zur Feinsteuerung der Eigenschaften der Schicht. Ihre Menge übersteigt im Regelfalle nicht 20 Gew. % bzgl. der Summe aller Komponenten mit Ausnahme der Lösemittel, bevorzugt nicht 10 %.

Beispiele geeigneter Zusatzstoffe zur Anwendung im atmosphärischen Korrosionsschutz umfassen Rheologiehilfsmittel, UV-Absorber, Lichtschutzmittel, Radikalfänger, Katalysatoren für die thermische Vernetzung, Slipadditive, Polymerisationsinhibitoren, Entschäumer, Emulgatoren, Entgasungsmittel, Netz- und Dipergiermittel, Haftvermittler, Verlaufsmittel, filmbildende Hilfsmittel, rheologiesteuernde Additive (Verdicker), Flammschutzmittel, Sikkative, Hautverhinderungsmittel, sonstige Korrosionsinhibitoren oder Wachse und Mattierungsmittel. Derartige Zusatzstoffe sind beispielsweise in »Lackadditive«, Hrsg. Johan Bieleman, Wiley-VCH, Weinheim, New York, 1998, oder DE-A 199 14 896, Spalte 13, Zeile 56, bis Spalte 15, Zeile 54 offenbart.

Die Zubereitung zur Ausführung des Verfahrens kann durch intensives Mischen aller Komponenten der Zubereitung hergestellt. Dem Fachmann sind geeignete Misch- oder Dispergieraggregate bekannt.

In einer bevorzugten Ausführungsform der Erfindung kann zunächst eine Dispersion aus dem Bindemittelsystem (A), dem Copolymer (C) sowie zumindest einem Teil des Lösemittels (D) hergestellt werden. Sofern es sich bei dem Bindemittel (A) um eine Primärdispersion handelt, ist das Bindemittel naturgemäß vordispergiert. Sofern das Bindemittel als Feststoff vorliegt, wird zunächst eine Lösung bzw. eine Sekundärdispersion hergestellt. Das Copolymer (C) wird ebenfalls bevorzugt in einem Lösemittel gelöst, emulgiert oder dispergiert eingesetzt. Vorteilhaft werden hierzu die Lösungen bzw. Emulsionen der Copolymere (C) verwendet, die bei der Herstellung der Copolymere (C) anfallen, ohne dass die Copolymere vorher noch isoliert werden.

Die Komponenten (B) sowie ggf. weitere Komponenten (E) können anschließend in der Vordispersion gelöst bzw. dispergiert werden.

### Ausführung des Verfahrens zum atmosphärischen Korrosionsschutz

Bei den Korrosionsschutzschichten kann es sich um alle Arten von Korrosionsschutzbeschichtungen handeln, wie beispielsweise Grundierungen (I), Zwischenbeschichtungen (II) und Deckbeschichtungen (III). Selbstverständlich kann es sich auch um Korrosionsschutzbeschichtungen handeln, welche die Eigenschaften von mindestens zwei dieser Schichten oder aller drei Schichten kombinieren, und somit zu einem vereinfachten Schichtaufbau beitragen. Weiterhin kann es sich um eine Fertigungsbeschichtung handeln. Hierunter versteht der Fachmann eine Schicht, die auf frisch gestrahlten Stahl aufgebracht werden kann, um Korrosionsschutz noch während der Fertigung von Stahlbauteilen, also beispielsweise während der Zusammenschweißens von Teilen, zu gewährleisten.

Das erfindungsgemäße Verfahren kann dem Erstschutz oder auch der Instandsetzung dienen.

Im Regelfalle empfiehlt es sich, die metallische Oberfläche für die Durchführung des erfindungsgemäßen Verfahrens in einem Verfahrensschritt (0) vorzubereiten, auch wenn dies nicht in jedem Fall absolut zwingend ist. Unter Oberflächenvorbereitung für die Durchführung von Korrosionsschutzmaßnahmen versteht der Fachmann die Reinigung der Oberfläche von allen Verunreinigungen sowie das Einstellen einer auf die Korrosionsschutzmaßnahme abgestimmten Oberflächenrauigkeit. Beispiele für Reinigungsverfahren umfassen das Reinigen mit Wasser oder Lösemitteln, Beizen mit geeigneten Formulierungen oder Hochdruckreinigen. Beispiele weiterer Maßnahmen umfassen Schleifen und insbesondere Strahlen der Oberfläche, beispielsweise Sandstrahlen sowie weiterhin Flammstrahlen. Es können hierbei alle anhaftenden Schichten bis hinunter zum blanken Metall abgetragen werden. Es ist aber auch möglich, unter Anwendung weniger intensiver Methoden nur schlecht haftende Schichten abzutragen, während intakte Schichten auf der Oberfläche verbleiben. Eine mögliche Technik hierzu ist das sogenannte Sweep-Strahlen.

Zur Ausführung des Verfahrens wird mindestens eine Korrosionsschutzschicht mit einer Dicke von mindestens 15 µm auf die metallische Oberfläche aufgebracht, wobei man die beschriebene, unter atmosphärischen Bedingungen vernetzbare Zubereitung einsetzt.

Die Korrosionsschutzschicht kann dabei unmittelbar auf die blanke metallische Oberfläche aufgebracht werden oder aber auf eine bereits mit einer Korrosionsschutzschicht vorbeschichtete Oberfläche.

Bevorzugt handelt es sich bei der mindestens einen Korrosionsschutzschicht um eine Grundierungsschicht (I), welche entweder direkt auf das blanke Metall oder auf eine eine Fertigungsbeschichtung aufweisende Metalloberfläche aufgebracht wird. Die optional vorhandene Fertigungsbeschichtung kann ebenfalls mit der erfindungsgemäßen Formulierung oder aber auch mittels einer anderen Formulierung erhalten werden.

Zum Aufbringen können die üblichen, dem Fachmann bekannten Techniken eingesetzt werden. Bevorzugt wird die Zubereitung aufgestrichen oder aufgespritzt.

Nach dem Aufbringen auf die Oberfläche härtet die aufgebrachte Beschichtung in Verfahrensschritt (2) unter atmosphärischen Bedingungen aus. Dies kann im einfachsten Falle durch das allmähliche Verdampfen des Lösemittels erfolgen. Je nach der Natur des eingesetzten Bindemittels können noch andere Vernetzungsprozesse ablaufen. Einzelheiten hierzu wurden bereits oben dargestellt.

Je nach der Dicke der gewünschten Korrosionsschutzschicht, kann die gesamte Schicht in einem einzigen Arbeitsgang aufgebracht werden, oder aber es können auch mehrere gleichartige Schichten nacheinander aufgebracht und jeweils gehärtet werden, um die gewünschte Gesamtschichtdicke der Korrosionsschutzschicht zu erreichen.

Auf die Grundierung (I) können noch weitere Korrosionsschutzschichten aufgebracht werden. Art und Anzahl der weiteren Schichten werden vom Fachmann bestimmt. Insbesondere kann die Grundierung (I) in weiteren Arbeitsgängen mit einer Zwischenschicht (II) und mit einer Deckschicht (III) versehen werden. Hierzu können im Prinzip beliebige Lacksysteme verwendet werden, vorausgesetzt, es treten in Kombination mit der Grundierung (I) keine unerwünschten Effekte auf. Durch das erfindungsgemäß verwendete Copolymer (C) wird die Haftung weiterer Schichten auf der Grundierung verbessert. Vorteilhaft können zur Grundierung (I), für die Zwischenschicht (II) sowie für die Deckschicht erfindungsgemäße Zubereitungen eingesetzt werden.

In einer weiteren, bevorzugten Ausführungsform des Verfahrens wird zunächst eine integrierte Grundierung (la) aufgebracht, welche direkt mit einem Decklack (III) überlackiert werden kann. Eine integrierte Grundierung kombiniert also die Eigenschaften der Grundierung (I) und der Zwischenschicht (III).

In einer weiteren, bevorzugten Ausführungsform der Erfindung wird nur eine einzige Korrosionsschutzschicht (Ib) aufgebracht, welche nicht überlackiert zu werden braucht. Eine solche einzige Korrosionsschutzschicht kombiniert also die Eigenschaften aller drei Schichten.

Die Gesamtdicke derartiger Korrosionsschutzanstriche wird vom Fachmann je nach den gewünschten Eigenschaften der Korrosionsschutzschicht bestimmt. Sie beträgt in der Regel mindestens 40 µm, bevorzugt mindestens 50 µm, besonders bevorzugt mindestens 60 µm und ganz besonders bevorzugt mindestens 80 µm, insbesondere mindestens 100 µm, speziell mindestens 125 µm, oft mindestens 150 µm und sogar mindestens 175 µm oder mindestens 200 µm. Die obere Grenze für die Gesamtschichtdicke, d.h. die Dicke aller aufgebrachten Korrosionsschutzschichten zusammen, beträgt 2 mm, bevorzugt weniger als 1,5 mm, besonders bevorzugt weniger als 1 mm, ganz besonders bevorzugt weniger als 800 µm und insbesondere weniger als 500 µm.

Die folgenden Beispiele sollen die Erfindung näher erläutern.

Teil I: Herstellung der polymeren Korrosionsinhibitoren.

### Polymer 1

### Copolymer aus 35 mol% Acrylnitril, 15 mol% Itaconsäure, und 50 mol% Styrol.

In einem 2I-Pilotrührwerk mit Ankerrührer und Innenthermometer wurden 77 g Itaconsäure in 314,8 g Tetrahydrofuran mit Stickstoff begast und auf 65 °C geheizt. Innerhalb von 5h wurde ein Zulauf 1 aus 74,2 g Acrylnitril und 207,9 g Styrol und innerhalb 6 h ein Zulauf 2 aus 21,6 g 2,2'-azobis(2,4-dimethylvaleronitril) (Handelsname WAKO® V-65) in 120 g Tetrahydrofuran zugegeben. Die Reaktionsmischung wurde weitere 2h bei 65 °C gerührt. Danach wurden innerhalb 1 h 3,6 g WAKO V-65 in 36 g Tetrahydrofuran zugegeben und weitere 4 h gerührt. Das erhaltene Polymer 1 ist eine klare, gelbe Lösung mit einem Feststoffgehalt von 48,5% und einem K-Wert von 20,9.

### Polymer 1a

Polymer 1a (mit Feststoffgehalt 23,8%) wurde erhalten durch Mischung von 30 g Polymer 1, 22,5 g Butylglykol, 15 g Wasser und 2,0 g Dimethylethanolamin.

### Polymer 1 b

Polymer 1b (mit Feststoffgehalt 30,4%) wurde erhalten durch Mischung von 30 g Polymer 1, 15 g Butylglykol, 12 g Wasser und 4,0 g Dimethylethanolamin.

### Polymer 2

Copolymer aus 50 mol% Acrylnitril, 20 mol% Itaconsäure und 30 mol% Styrol.

In einem 21-Pilotrührwerk mit Ankerrührer und Innenthermometer wurden 111,8 g Itaconsäure in 314,8 g Tetrahydrofuran mit Stickstoff begast und auf 65 °C geheizt. Innerhalb von 5h wurde ein Zulauf 1 aus 114 g Acrylnitril und 134,2 g Styrol und innerhalb 6 h ein Zulauf 2 aus 21,6 g WAKO V-65 in 120 g Tetrahydrofuran zugegeben. Die Reaktionsmischung wurde weitere 2h bei 65 °C gerührt. Danach wurden innerhalb 1 h 3,6 g WAKO V-65 in 36 g Tetrahydrofuran zugegeben und weitere 4 h gerührt. Das erhaltene Polymer 2 wurde mit 250 g Tetrahydrofuran verdünnt und ergibt eine klare, gelbe Lösung mit einem Feststoffgehalt von 50,7% und einem K-Wert von 20,4.

### Polymer 2a

Polymer 2a (mit Feststoffgehalt 26,8%) wurde erhalten durch Mischung von 30 g Polymer 2, 15 g Butylglykol, 20 g Wasser und 3,0 g Dimethylethanolamin.

### Polymer 2b

Polymer 2b (mit Feststoffgehalt 29,9%) wurde erhalten durch Mischung von 30 g Polymer 2, 15 g Butylglykol, 20 g Wasser und 6,0 g Dimethylethanolamin.

### Polymer 3

Copolymer aus 20 mol% Acrylnitril, 40 mol% Itaconsäure und 40 mol% Styrol.

In einem 2I-Pilotrührwerk mit Ankerrührer und Innenthermometer wurden 179,6 g Itaconsäure in 314,8 g Tetrahydrofuran mit Stickstoff begast und auf 65 °C geheizt. Innerhalb von 5h wurde ein Zulauf 1 aus 36,6 g Acrylnitril und 143,8 g Styrol und innerhalb 6 h ein Zulauf 2 aus 21,6 g WAKO V-65 in 120 g Tetrahydrofuran zugegeben. Die Reaktionsmischung wurde weitere 2h bei 65 °C gerührt. Danach wurden innerhalb 1 h 3,6 g WAKO V-65 in 36 g Tetrahydrofuran zugegeben und weitere 4 h gerührt. Das erhaltene Polymer 3 wurde mit 250 g Tetrahydrofuran verdünnt und ergibt eine klare, gelbe Lösung mit einem Feststoffgehalt von 49,5% und einem K-Wert von 18,7.

Polymer 3a (mit Feststoffgehalt 30,2%) wurde erhalten durch Mischung von 30 g Polymer 3, 15 g Butylglykol, 15 g Wasser und 4,7 g Dimethylethanolamin.

### Polymer 4

Copolymer aus 20 mol% Acrylnitril, 40 mol% Itaconsäure und 40 mol% Styrol

In einem 2I-Pilotrührwerk mit Ankerrührer und Innnenthemometer wurden 280,2 g Itaconsäure in 380,8 g 2-Butyloxy-ethanol mit Stickstoff begast und auf 90°C geheizt. Innerhalb von 5h wurde ein Zulauf 1 aus 57,1 g Acrylnitril und 224,3 g Styrol und innerhalb 6 h ein Zulauf 2 aus 33,7 g tert.-Butylperoctoat in 303,4 g 2-Butyloxy-ethanol zugegeben. Die Reaktionsmischung wurde eine weitere Stunde bei 90°C gerührt. Danach wurde die Temperatur der Reaktionsmischung auf 95°C erhöht und innerhalb von 1 h 5,6 g Natriumperoxodisulfat in 77,5 g VE-Wasser (vollentsalztes Wasser) zugeben und 1 weitere h bei 95°C gerührt. Der Schritt wurde noch dreimal mit analogen Bedingungen wiederholt. Das erhaltene Polymer ergibt eine dunkelgelbe, trübe Lösung mit einem Feststoffgehalt von 38,3 %.

### Polymer 4a

Polymer 4a (mit Feststoffgehalt 30,0%) wurde erhalten durch Mischung von 75 g Polymer 4, 41,6 g VE-Wasser und 8,9 g Dimethylethanolamin.

### Polymer 4b

Polymer 4b (mit Feststoffgehalt 30,0%) wurde erhalten durch Mischung von 75 g Polymer 4, 55,6 g VE-Wasser und 14,9 g Triethanolamin.

### Polymer 4c

Polymer 4c (mit Feststoffgehalt 30,0%) wurde erhalten durch Mischung von 75 g Polymer 4, 17,1 g VE-Wasser und 14,0 g 25%iger Ammoniaklösung.

### Polymer 5

Copolymer aus 21,1 mol% Acrylnitril, 36,9 mol% Itaconsäure und 42,0 mol% Styrol

In einem 2I-Pilotrührwerk mit Ankerrührer und Innnenthemometer wurden 246,4 g Itaconsäure in 380,8 g 2-Butyloxy-ethanol mit Stickstoff begast und auf 90°C geheizt. Innerhalb von 5h wurde ein Zulauf 1 aus 57,1 g Acrylnitril und 224,3 g Styrol und innerhalb 6 h ein Zulauf 2 aus 33,7 g tert.-Butylperoctoat in 303,4 g 2-Butyloxy-ethanol zugegeben. Die Reaktionsmischung wurde eine weitere Stunde bei 90°C gerührt. Danach wurde die Temperatur der Reaktionsmischung auf 95°C erhöht und innerhalb von 1 h 5,6 g Natriumperoxodisulfat in 77,5 g VE-Wasser zugeben und 1 weitere h bei 95°C gerührt. Der Schritt wurde noch dreimal mit analogen Bedingungen wiederholt. Das erhaltene Polymer ergibt eine dunkelgelbe, trübe Lösung mit einem Feststoffgehalt von 37,0 %.

### Polymer 5a

Polymer 5a (mit Feststoffgehalt 30,0%) wurde erhalten durch Mischung von 68,4 g Polymer 5, 33,0 g VE-Wasser und 7,3 g Dimethylethanolamin.

### Polymer 5b

Polymer 5b (mit Feststoffgehalt 30,0%) wurde erhalten durch Mischung von 70,0 g Polymer 5, 39,6 g VE-Wasser, 1,5 g Itaconsäure und 8,5 g Dimethylethanolamin.

### Polymer 6

In einem 2I-Pilotrührwerk mit Ankerrührer und Innnenthemometer wurden 246,4 g Itaconsäure in 380,8 g Propylenglykol-Monobutylether mit Stickstoff begast und auf 90°C geheizt. Innerhalb von 5h wurde ein Zulauf 1 aus 57,1 g Acrylnitril und 224,3 g Styrol und innerhalb 6 h ein Zulauf 2 aus 33,7 g tert.-Butylperoctoat in 303,4 g Propylenglykol-Monobutylether zugegeben. Die Reaktionsmischung wurde eine weitere Stunde bei 90°C gerührt. Danach wurde die Temperatur der Reaktionsmischung auf 95°C erhöht und innerhalb von 1 h 5,6 g tert.-Butylperoctoat in 50,4 g Propylenglykol-Monobutylether zugeben und 1 weitere h bei 95°C gerührt. Der Schritt wurde noch 3 mal mit analogen Bedingungen wiederholt. Das erhaltene Polymer ergibt eine dunkelgelbe, klare Lösung mit einem Feststoffgehalt von 39,7 %.

### Polymer 6a

Polymer 6a (mit Feststoffgehalt 30,0%) wurde erhalten durch Mischung von 63,7 g Polymer 6, 37,7 g VE-Wasser und 7,3 g Dimethylethanolamin.

### Polymer 6b

Polymer 6b (mit Feststoffgehalt 30,0%) wurde erhalten durch Mischung von 65,2 g Polymer 6, 44,4 g VE-Wasser, 1,5 g Itaconsäure und 8,5 g Dimethylethanolamin.

### Polymer 7

In einem 2I-Pilotrührwerk mit Ankerrührer und Innnenthemometer wurden 215,5 g Itaconsäure in 292,8 g n-Butanol versetzt mit 147,7 g Dimethylethanolamin mit Stickstoff begast und auf 90°C geheizt. Innerhalb von 5h wurde ein Zulauf 1 aus 43,9 g Acrylnitril und 172,6 g Styrol und innerhalb 6 h ein Zulauf 2 aus 25,9 g tert.-Butylperoctoat in 233,4 g n-Butanol zugegeben. Die Reaktionsmischung wurde eine weitere Stunde bei 90°C gerührt. Danach wurde innerhalb von 1 h 4,3 g tert.-Butylperoctoat in 59,6 g n-Butanol zugeben und 1 weitere h bei 95°C gerührt. Der Schritt wurde noch 2 mal mit analogen Bedingungen wiederholt wobei nach der letzten Zugabe 2 h nachgerührt wurde. Die Temperatur im Heizbad wurde auf 120°C erhöht.
Nach Zugabe von 250 g VE-Wasser wurde n-Butanol durch Einleiten von Wasserdampf azeotrop abdestilliert. Das erhaltene Polymer ergibt eine dunkelgelbe, klare Lösung mit einem Feststoffgehalt von 34,7 %.

### Polymer 8

In einem 2I-Pilotrührwerk mit Ankerrührer und Innnenthemometer wurden 179,6 g Itaconsäure in 209,9 g n-Butanol und 104,9 g VE-Wasser mit Stickstoff begast und auf 90°C geheizt. Innerhalb von 5h wurde ein Zulauf 1 aus 36,6 g Acrylnitril und 143,8 g Styrol und innerhalb 6 h ein Zulauf 2 aus 21,6 g tert.-Butylperoctoat in 194,4 g n-Butanol zugegeben. Die Reaktionsmischung wurde eine weitere Stunde bei 90°C gerührt. Danach wurde innerhalb von 1 h 3,6 g tert.-Butylperoctoat in 32,4 g n-Butanol zugeben und 1 weitere h bei 95°C gerührt. Der Schritt wurde noch 2 mal mit analogen Bedingungen wiederholt wobei nach der letzten Zugabe 2 h nachgerührt wurde. Die Temperatur im Heizbad wurde auf 105°C erhöht.
Nach Zugabe von 123,1 g Dimethylethanolamin in 500 g VE-Wasser innerhalb von 30 Minuten wurde n-Butanol durch einleiten von Wasserdampf azetrop abdestilliert. Das erhaltene Polymer ergibt eine gelbe, fast klare Lösung mit einem Feststoffgehalt von 33,5 %.

### Polymer 9

In einem 2I-Pilotrührwerk mit Ankerrührer und Innnenthemometer wurden 229,0 g Itaconsäure in 311,1 g Tetrahydrofuran mit Stickstoff begast und auf 65°C geheizt. Innerhalb von 5h wurde ein Zulauf 1 aus 46,7 g Acrylnitril und 183,3 g Styrol und innerhalb 6 h ein Zulauf 2 aus 27,5 g Wako V 65 in 247,9 g Tetrahydrofuran zugegeben. Die Reaktionsmischung wurde eine weitere Stunde bei 65°C gerührt. Danach wurde innerhalb von 1 h 4,6 g Wako V 65 in 41,3 g Tetrahydrofuran zugeben und 2 weitere Stunden bei 70°C gerührt. Die Temperatur im Heizbad wurde auf 95°C erhöht. Es wurden 270 g Tetrahydrofuran abdestilliert. Die Temperatur im Heizbad wurde auf 100°C erhöht und 200 g VE-Wasser innerhalb 1 Stunde zudosiert, dabei wurden 170 g Tetrahydrofuran/VE-Wasser abdestilliert.
Nach Zugabe von 157,1 g Dimethylethanolamin in 600 g VE-Wasser innerhalb von 60 Minuten wurde Tetrahydrofuran durch Einleiten von Wasserdampf azetrop abdestilliert. Das erhaltene Polymer ergibt eine gelbe, fast klare Lösung mit einem Feststoffgehalt von 31,2 %.

### Teil II: Anwendungstechnische Prüfungen

Zur anwendungstechnischen Prüfung wurden drei unterschiedliche Korrosionsschutzformulierungen auf Basis zweier handelsüblicher wässrigen Styrol-Acrylat-Dispersionen für Anstrichstoffe (Acronal® Optive 410, Fa. BASF Corp. sowie Acronal® S 790, Fa. BASF AG), sowie eines Labormusters einer Dispersion auf Basis von n-Butylacrylat und Styrol als Hauptmonomeren, welches analog EP 1062282 hergestellt wurde, eingesetzt. Die verwendeten Dispersionen weisen die folgenden Eigenschaften auf:

| | Acronal® Optive 410 | Acronal® S 790 | Labormuster |
|---|---|---|---|
| Feststoffgehalt | 49 - 51 % | 49 - 51 % | ca. 50 - 51 % |
| pH | 7,5 - 8,5 | 7,5 - 9,0 | ca. 9,5 |
| Viskosität | 500 - 1000 cps (Brookfield) | 700 - 1500 mPas (bei 100 s-1) | ca. 200 mPas (bei 100 s-1) |
| Dichte | 1,06 g/cm3 | 1,08 g/cm3 | Nicht bestimmt |
| MFFT (Minimum Film-Forming-Temperature (nach ASTM D 2354 bzw. ISO 2115)) | ca. 12°C | ca. 20°C | Nicht bestimmt |
| Partikelgröße | ca. 110 nm | ca. 135 nm | ca. 125 nm |

Zur Herstellung der erfindungsgemäßen Formulierungen wurden der jeweiligen Styrol-Acrylat-Dispersion jeweils 3 Gew. % der Copolymere zugegeben (gerechnet als festes Copolymer bezüglich des Feststoffanteils der Dispersion). Hierzu wurden die oben beschriebenen Butylglykol-haltigen Lösungen der Copolymere eingesetzt.

Zu Vergleichszwecken wurde bei den Lacken auf Basis Acronal® Optive 410 bzw. Acronal® S 790 jeweils eine Probe ohne Zusatz eines polymeren Korrosionsinhibitors hergestellt, bei der Testserie auf Basis des Labormusters wurde als Vergleich ein alternativer polymerer Inhibitor zugesetzt..

### Richtformulierung für Korrosionsschutz-Grundierungen

Unter Verwendung der erhaltenen wässrigen Dispersionen aus Styrol-Acrylat-Copolymer mit und ohne Zusatz von Korrosionsschutzpolymeren wurden Zubereitungen gemäß folgender Vorschrift hergestellt:

### Lack auf Basis Acronal® Optive 410:

393,4 g der jeweiligen wässrigen Polymerdispersion wurden mit 2,2 g eines handelsüblichen Entschäumers für Lacke (Mischung von Polysiloxanen und hydrophoben Feststoffen in Polyglykol; BYK® 022, Fa. Byk) versetzt, anschließend wurde mittels eines Dispermaten eine Mischung bestehend aus 0,6 g eines anionischen Dispergiermittels (saurer Phosphorsäureester eines Fettalkoholalkoxylates; Lutensit® A-EP, Fa. BASF AG), 11,0 g konz. Ammoniak und 58,6 g Wasser zugegeben. Unter Rühren wurde weiterhin eine Mischung aus 7,2 g Phenoxypropanol (Filmbildehilfsmittel) und 7,2 g Benzin (Siedebereich 180-210°C, Filmbildehilfsmittel) eingearbeitet.

Anschließend wurden 85,0 g eines Hämatit-Pigmentes (Bayferrox® 130 M, Fa. Lanxess), 82,1 g eines Korrosionsschutzpigmentes auf Basis Zinkphosphat (Heucophos® ZMP, modifiziertes Zinkphosphat, Fa. Heubach), 36,0 g Magnesiumsilikat (Füllstoff; Talkum 20 M 2, Fa. Luzenac) sowie 127,8 g eines Füllstoffes auf Basis Bariumsulfat und Zinksulfid (30 Gew. % ZnS) (Litopone® L, Fa. Sachtleben) zugegeben. Die gesamte Mischung wurde für mindestens 30 Minuten mit Glasperlen (ø 3mm) dispergiert. Daraufhin wurden unter weiterem Rühren weitere 166,4 g Polymerdispersion, 1,9 g BYK® 022 sowie 3,7 g einer 1:1-Mischung aus Wasser und einem handelsüblichen Korrosionsinhibitor (Korrosionsinhibitor L 1, Fa. Erbslöh) zugegeben und die Glasperlen abgesiebt.

Zum Abschluss wurde der Ansatz mit einer Mischung aus 3,7 g einer 25 % igen Lösung eines handelsüblichen Verdickungsmittels auf Urethan-Basis (Collacral® PU 85, Fa. BASF AG) und 13,2 g Butylglykol (Lösungsmittel) versetzt sowie gegebenenfalls der pH-Wert mit konz. Ammoniak auf ca. 9,5 nachgestellt. Man erhielt 1000 g einer Korrosionsschutz-Grundierung mit 61 % Feststoffgehalt und einer Pigment/Volumen-Konzentration (PVK) von 23%.

### Lack auf Basis Acronal® S 790:

530,6 g der jeweiligen wässrigen Polymerdispersion wurden mit 2,8 g eines handelsüblichen Entschäumers für Lacke (Kombination von flüssigen Kohlenwasserstoffen, hydrophober Kieselsäure, Fettstoffen, oxalkylierten Verbindungen und nicht-ionogenen Emulgatoren; Agitan® 295, Fa. Münzing-Chemie) versetzt, anschließend wurde mittels eines Dispermaten eine Mischung bestehend aus 0,9 g eines anionischen Dispergiermittels (Natriumsalz einer mittelmolekularen Polyacrylsäure, 35%ig in Wasser; Pigmentverteiler NL, Fa. BASF AG), 20,8 g konz. Ammoniak und 115,7 g Wasser zugegeben. Unter Rühren wurde weiterhin eine Mischung aus 9,2 g Phenoxypropanol (Filmbildehilfsmittel) und 9,2 g Benzin (Siedebereich 180-210°C, Filmbildehilfsmittel) eingearbeitet.

Anschließend wurden 74,7 g eines Hämatit-Pigmentes (Bayferrox® 130 M, Fa. Lanxess), 74,7 g eines Korrosionsschutzpigmentes auf Basis Zinkphosphat (Heucophos® ZMP, modifiziertes Zinkphosphat, Fa. Heubach), 37,1 g Calciumcarbonat (Füllstoff; Millicarb, Fa. Omya) sowie 112,2 g eines Füllstoffes auf Basis Bariumsulfat und Zinksulfid (30 Gew. % ZnS) (lithopone® L, Fa. Sachtleben) zugegeben. Die gesamte Mischung wurde für mindestens 30 Minuten mit Glasperlen (ra 3mm) dispergiert. Daraufhin wurden unter weiterem Rühren 1,9 g Agitan® 295, 3,5 g einer 1:1-Mischung aus Wasser und einem handelsüblichen Korrosionsinhibitor (Korrosionsinhibitor L 1, Fa. Erbslöh) sowie 1,9 g eines Topfkonservierers auf Basis Chlormethyl- und Methylisothiazolon + N-/O-Formalen (Parmetol A 26, Fa. Schülke & Mayr) zugegeben und die Glasperlen abgesiebt.

Zum Abschluss wurde der Ansatz mit einer Mischung aus 2,2 g einer 25 % igen Lösung eines handelsüblichen Verdickungsmittels auf Urethan-Basis (Collacral® PU 75, Fa. BASF AG) und 2,6 g Butylglykol (Lösungsmittel) versetzt sowie gegebenenfalls der pH-Wert mit konz. Ammoniak auf ca. 9,5 nachgestellt. Man erhielt 1000 g einer Korrosionsschutz-Grundierung mit 57% Feststoffgehalt und einer Pigment/Volumen-Konzentration (PVK) von 23%.

### Lack auf Basis des Labormusters

250 g der jeweiligen wässrigen Polymerdispersion (ca. 50%ig) wurden mit 1,14 g eines handelsüblichen Entschäumers für Lacke (Mischung von Polysiloxanen und hydrophoben Feststoffen in Polyglykol; BYK® 022, Fa. Byk) sowie mit 2,22 g eines Netzmittels (Surfynol® 104, 50%ig in n-Propanol; Fa. Air-Products) versetzt, anschließend wurde mittels eines Dispermaten eine Mischung bestehend aus 0,6 g eines anionischen Dispergiermittels (saurer Phosphorsäureester eines Fettalkoholalkoxylates; Lutensit® A-EP, Fa. BASF AG), 1,56 g konz. Ammoniak und 41,6 g Wasser zugegeben. Unter Rühren wurde weiterhin eine Mischung von Filmbildehilfsmitteln bestehend aus 4,5 g Phenoxypropanol, 4,5 g Butylglykol und 4,5 g Benzin (Siedebereich 180-210°C) eingearbeitet.

Anschließend wurden 68,0 g eines Hämatit-Pigmentes (Bayferrox® 130 M, Fa. Lanxess), 65,9 g eines Korrosionsschutzpigmentes auf Basis Zinkphosphat (Heucophos® ZMP, modifiziertes Zinkphosphat, Fa. Heubach), 28,3 g Magnesiumsilikat (Füllstoff; Talkum 20 M 2, Fa. Luzenac) sowie 102,2 g eines Füllstoffes auf Basis Bariumsulfat und Zinksulfid (30 Gew. % ZnS) (lithopone® L, Fa. Sachtleben) zugegeben. Die gesamte Mischung wurde für mindestens 30 Minuten mit Glasperlen (ø 3mm) dispergiert. Daraufhin wurden unter weiterem Rühren weitere 1,14 g BYK® 022 sowie 3,24 g einer 1:1-Mischung aus Wasser und einem handelsüblichen Korrosionsinhibitor (Korrosionsinhibitor L 1, Fa. Erbslöh) zugegeben und die Glasperlen abgesiebt.

Zum Abschluss wurde der Ansatz mit einer Mischung aus 2,2g einer 25 % igen Lösung eines handelsüblichen Verdickungsmittels auf Urethan-Basis (Collacral® PU 85, Fa. BASF AG) und 2,2 g Butylglykol (Lösungsmittel) versetzt sowie gegebenenfalls der pH-Wert mit konz. Ammoniak auf ca. 9,5 nachgestellt. Man erhielt ca. 600 g einer Korrosionsschutz-Grundierung mit ca. 66% Feststoffgehalt und einer Pigment/Volumen-Konzentration (PVK) von 35%.

Applikation der Formulierungen auf Stahlbleche, Vorbereitung für den Salzsprühtest

Die zu prüfenden Grundierungen wurden mit vollentsalztem Wasser auf die gewünschte Viskosität von 300 bis 1000 mPas (gemessen mit einem 455N/65 Digital Rotothinner® der Firma Sheen Instruments) verdünnt und auf ein gereinigtes unverzinktes Stahlblech (200 x 80 x 0,9 mm) mit einem Kastenrakel aufgezogen; die Spaltgröße wird dabei so gewählt, dass sich eine Trockenschichtdicke von 60-85 µm ergibt.

Nach sechstägiger Trocknung bei Raumtemperatur sowie einer eintägigen Temperung bei 50°C wurden die Rückseite des Prüfblechs zum Schutz vor Korrosion mit einem lösemittel-basierten Lack beschichtet sowie die Kanten mit Tesa®-Film abgeklebt.

Abschließend wurde das Prüfblech auf der mit der zu testenden Grundierung beschichteten Seite mit einem Ritzstachel bis auf das Substrat geritzt.

### Salzsprühtest / Auswertung

Mit den Proben wurde ein Salzsprühtest gemäß DIN EN ISO 7253 durchgeführt, für die Lacke auf Basis Acronal Optive ® 410 sowie Acronal® S 790 betrug die Prüfdauer 400h, für die Lacke auf Basis des Labormusters 576h.

Die Auswertung erfolgte hierbei durch optischen Vergleich der getesteten Proben mit den von ISO 7253 vorgegebenen Standards.

Zur Bewertung des Korrosionsverhalten:

### Ausbreitung der Blasen am Ritz

Minimale bzw. maximale Entfernung in mm der durch Korrosion verursachten Blasen ausgehend von der künstlichen Verletzungsstelle gemäß ISO 4628-2.

### Enthaftung am Ritz

Im Gegensatz zum Gitterschnitt (s.u.) wird die Haftung des Lacks in der direkten Umgebung der künstlichen Verletzungsstelle untersucht. Hierzu wird unmittelbar nach dem Salzsprühtest die Beschichtung über den Ritz hinweggehend mit einem Klebeband beklebt, der Lack an den Rändern des Klebebands eingeschnitten und danach das Klebeband abgezogen ("Tesa®-Abriss"). Gemessen wird der minimale bzw. maximale Abstand in mm des durch den Abriss freigelegten Metalluntergrunds ausgehend von der künstlichen Verletzungsstelle.

### Unterrostung am Ritz

Ausgehend von der künstlichen Verletzungsstelle bildet sich Rost unterhalb der Beschichtung. Der Wert gibt die minimale bzw. maximale Entfernung in mm des dabei gebildeten Eisenoxids gemessen vom Ritz aus an; vor der Abmusterung wurde der metallische Untergund dabei üblicherweise durch den oben erwähnten "Tesa®-Abriss" freigelegt.

### Flächenkorrosion

Anteil der korrodierten Fläche im Verhältnis zur Gesamtfläche des Prüfbleches in [%].

### Gitterschnitt (gemäß DIN EN ISO 2409)

Mittels des Gitterschnitt-Tests wird die Haftung des Lackes auf dem Untergrund ermittelt. Hierzu wird nach dem Salzsprühtest ein Gitter aus mehreren Schnitten (Linienabstand 2 mm) in den Lack eingeschnitten, mit einem Klebeband beklebt und danach das Klebeband abgezogen. Bewertet wurde das Aussehen des Gitters nach Abziehen des Klebebandes. Es werden Noten von 0 bis 5 nach folgender Skala vergeben.
GT 0 Die Schnittränder sind vollkomen glatt und keines der Quadrate des Gitters ist abgeplatzt
GT 1 Die beschichtung ist längst der Schnittränder abgeplatzt, die abgeplatzte Fläche ist aber nicht wesentlich größer als 15% der Gitterschnittfläche.
GT 2 Die abgeplatzte Gitterfläche ist deutlich größer als 15% aber nicht wesentlich größer als 35%.
GT 3 Die Beschichtung ist längst der Schnittränder teilweise oder ganz in breiten Streifen abgeplatzt oder einige Quadrate sind ganz oder teilweise abgeplatzt.
GT 4 Die betroffene Gitterschnittfläche ist aber nicht wesentlich größer als 65%.
GT 5 Jedes Abplatzen, das stärker als GT 4 eingestuft werden kann.

Die Ergebnisse der Tests sind in Tabelle 1 (Lacke auf Basis Acronal® Optive 410) sowie 2 (Lacke auf Basis Acronal® S 790) zusammengestellt. Aufnahmen der Probenoberfläche von der Nullprobe und Lacken mit Polymer 3 sind in Abbildung 1 (Lacke auf Basis Acronal® Optive 410) und 2 (Lacke auf Basis Acronal® S 790) zusammengestellt.

Die Daten in den Tabelle 1 und 2 sowie die Abbildungen zeigen, dass die Korrosion durch die erfindungsgemäß verwendeten Copolymere (Polymere 1a, 1b, 2a, 2b und 3) im Vergleich zu einer Probe ohne polymere Korrosionsinhibitoren deutlich gehemmt wird. Während bei den Lacken auf Basis Acronal® Optive 410 bei der Vergleichsprobe ohne Korrosionsinhibitor es zu einer ausgeprägten Blasenbildung am Ritz begleitet von Haftungsveriust und Unterrostung kommt, ist diese Tendenz bei den erfindungsgemä-βen Beispielen deutlich reduziert bzw. nicht vorhanden. Analoges gilt für die Lacke auf Basis Acronal® S 790, bei denen die Vergleichsprobe ohne Korrosionsinhibitor auf der gesamten Fläche korrodiert ist, während die Flächenkorrosion bei Zusatz der erfindungsgemäßen Copolymere deutlich auf bis zu 10-20% reduziert werden konnte.

**Tabelle 1: Zusammenstellung der Resultate im Salzsprühtest der Lacke auf Basis Acronal^{®} Optive 410**

| | Nullprobe | Polymer 1a | Polymer 1b | Polymer 2a | Polymer 2b | Polymer 3 |
|---|---|---|---|---|---|---|
| Polymerer Korrosionsinhibitor | Kein | AN/IS/S (35/15/50) | AN/IS/S (35/15/50) | AN/IS/S (50/20/30) | AN/IS/S (50/20/30) | AN/IS/S (20/40/40) |
| Schichtdicke [µm] | 67 - 82 | 66 - 82 | 66 - 75 | 66-81 | 68-81 | 67 - 88 |
| Blasen am Ritz [mm] | 7,7 - Rand | 0 - Rand | 0 - Rand | 0 - 18,3 | 0-11,3 | 0-6,0 |
| Enthaftung am Ritz [mm] | 5,0 - 9,0 und Blasen | 2,0 - 9,0 und Blasen | 1,6 - 10,6 und Blasen | 1,0 - 9,8 | 0,5 - 4,0 | 0 |
| Unterrostung am Ritz [mm] | 1,6 - 4,9 | 0 - 1,0 | 0-0,5 | 0 - 3,2 | 1,0 - 2,8 | 0 |

| | | | | | | |
|---|---|---|---|---|---|---|
| AN: Acrylnitril, IS: Itaconsäure, S: Styrol | | | | | | |

**Tabelle 2: Zusammenstellung der Resultate im Salzsprühtest der Lacke auf Basis Acronal^{®} S 790**

| | Nullprobe | Polymer 1a | Polymer 1b | Polymer 2a | Polymer 2b | Polymere 3 |
|---|---|---|---|---|---|---|
| Polymerer Korrosionsinhibitor | Kein | AN/IS/S (35/15/50) | AN/IS/S (35/15/50) | AN/IS/S (50/20/30) | AN/IS/S (50/20/30) | AN/IS/S (20/40/40) |
| Schichtdicke [µm] | 68 - 78 | 64 - 77 | 72 - 85 | 64-71 | 65 - 74 | 68 - 76 |
| Flächenkorrosion | 100 % | ca. 20% | ca. 20% | ca. 10% | ca. 80% | ca. 10% |
| Gitterschnitt nach Salzsprühtest | Gt 5 | Gt 0 | Gt 0 | Gt 0 | Gt 5 | Gt 0 |

| | | | | | | |
|---|---|---|---|---|---|---|
| AN: Acrylnitril, IS: Itaconsäure, S: Styrol | | | | | | |

**Tabelle 3: Zusammenstellung der Resultate im Salzsprühtest der Lacke auf Basis des Labormusters**

| | Vergleich | Polymer 3 | Polymer 4a | Polymer 4b | Polymer 4c | Polymer 5a | Polymer 5b | Polymer 7 |
|---|---|---|---|---|---|---|---|---|
| Schichtdicke [µm] | 65-79 | 66-81 | 65 - 78 | 71 - 88 | 69-81 | 69 - 88 | 66 - 78 | 69 - 80 |
| Unterrostung am Ritz [mm] | 2-25 und Blasen | 1 - 7 und Blasen | 5-25 | 2-25 | 1 - 25 | 9 - 24 | 2-19 | 2-13 |
| Flächenkorrosion | 55% | 13% | 30% | 27% | 22% | 50% | 15% | 27% |

| | | | | | | | | |
|---|---|---|---|---|---|---|---|---|
| AN: Acrylnitril, IS: Itaconsäure, S: Styrol | | | | | | | | |

## Patentansprüche

1. Verfahren zum Aufbringen von Korrosionsschutzschichten auf metallische Oberflächen, bei dem man auf die blanke oder vorbeschichtete metallische Oberfläche eine unter atmosphärischen Bedingungen härtbare Zubereitung in einer Dikke von mindestens 15 µm aufbringt, wobei die Zubereitung mindestens umfasst
- 15 bis 70 Gew. % mindestens eines unter atmosphärischen Bedingungen härtbaren Bindemittelsystems (A),
- 1 bis 70 Gew. % mindestens einer Komponente (B), ausgewählt aus der Gruppe von feinteiligen Füllstoffen, Pigmenten oder Farbstoffen,
- 0,1 bis 40 Gew. % eines polymeren Korrosionsschutzmittels (C), sowie
- 5 bis 83,9 Gew. % mindestens eines Lösemittels (D),
wobei die Mengen jeweils auf die Gesamtmenge aller Komponenten der Formulierung bezogen sind und
es sich bei dem polymeren Korrosionsschutzmittel um ein Copolymer (C) handelt, welches aus folgenden monomeren Bausteinen aufgebaut ist:
(C1) 5 bis 60 Gew. % mindestens eines monoethylenisch ungesättigten Monomers, welches mindestens eine, bevorzugt genau eine Nitrilgruppe aufweist,
(C2) 10 bis 70 Gew. % mindestens eines monoethylenisch ungesättigten Monomers, welches mindestens eine Säuregruppe umfasst,
(C3) 20 bis 80 Gew. % mindestens eines monoethylenisch ungesättigten, aromatischen Kohlenwasserstoffes, sowie
(C4) optional 0 bis 25 Gew. % von weiteren von (C1) bis (C3) verschiedenenethylenisch ungesättigten Monomeren,
wobei die Menge jeweils auf die Gesamtmenge aller monomeren Baueinheiten im Copolymer bezogen ist,
und anschließendem Härten der aufgebrachten Schicht unter atmosphärischen Bedingungen,
wobei unter atmosphärischen Bedingungen Härtungstemperaturen von mehr als 0 bis 40 °C in Gegenwart von Luft und eine relative Luftfeuchtigkeit von 10 bis 80% verstanden werden.

2. Verfahren gemäß Anspruch 1, **dadurch gekennzeichnet, dass** es sich bei Monomer (C1) um Acrylnitril handelt.

3. Verfahren gemäß Anspruch 1 oder 2, **dadurch gekennzeichnet, dass** es sich bei Monomer (C3) um Styrol handelt.

4. Verfahren gemäß einem der Ansprüche 1 bis 3, **dadurch gekennzeichnet, dass** es sich bei Monomer (C2) um Itaconsäure handelt.

5. Verfahren gemäß einem der Ansprüche 1 bis 4, **dadurch gekennzeichnet, dass** die Säuregruppen ganz oder teilweise neutralisiert sein können.

6. Verfahren gemäß einem der Ansprüche 1 bis 5, **dadurch gekennzeichnet, dass** die Menge von Monomer (C1) 5 bis 45 Gew. %, von Monomer (C2) 15 bis 60 Gew. % und von Monomer (C3) 30 bis 70 Gew. % beträgt.

7. Verfahren gemäß einem der Ansprüche 1 bis 6, **dadurch gekennzeichnet, dass** mindestens ein Monomer (C4) in einer Menge von 0,1 bis 25 Gew. % vorhanden ist.

8. Verfahren gemäß Anspruch 7, **dadurch gekennzeichnet, dass** es sich bei Monomer (C4) um ein OH-Gruppen umfassendes, monoethylenisch ungesättigtes Monomer handelt.

9. Verfahren gemäß einem der Ansprüche 1 bis 8, **dadurch gekennzeichnet, dass** es sich bei der metallischen Oberfläche um die Oberfläche von Stahl, Zink oder Zinklegierungen, Aluminium oder Aluminiumlegierungen handelt.

10. Verfahren gemäß einem der Ansprüche 1 bis 3, **dadurch gekennzeichnet, dass** es sich bei den Säuregruppen von Monomer (C2) um Carboxylgruppen und/oder Sulfonsäure-gruppen handelt.

11. Verfahren gemäß einem der vorstehenden Ansprüche, **dadurch gekennzeichnet, dass** es sich bei dem Bindemittelsystem um mindestens eines ausgewählt aus der Gruppe von wässrigen oder überwiegend wässrigen Dispersionen von Polyacrylaten bzw. Styrol-Acrylat-Copolymeren (A1), Styrol-Alkadien-Polymeren (A2), Polyurethanen (A3) oder Alkydharzen (A4) handelt.

12. Verfahren gemäß einem der vorstehenden Ansprüche, **dadurch gekennzeichnet, dass** es sich um die Oberflächen von metallischen Bauwerken oder Metallkonstruktionen handelt.

13. Verfahren gemäß Anspruch 12, **dadurch gekennzeichnet, dass** es sich um die Oberfläche von Gebäude, Brücken, Strommasten, Tanks, Container, Gebäude, Pipelines, Kraftwerke, chemische Anlagen, Schiffe, Kräne, Pfähle, Spundwände, Armaturen, Rohre, Tanks, Fittings, Flansche, Kupplungen, Hallen, Dächer und Baustahl handelt.

14. Verfahren gemäß einem der vorstehenden Ansprüche, **dadurch gekennzeichnet dass** die Schichtdicke der ausgehärteten Schicht mindestens 25 µm beträgt.

15. Zubereitung zum Aufbringen von Korrosionsschutzschichten auf metallische Oberflächen für den atmosphärischen Korrosionsschutz umfassend mindestens die folgenden Komponenten:
(A) 15 bis 70 Gew. % mindestens eines unter atmosphärischen Bedingungen härtbaren Bindemittelsystems (A) gemäß Anspruch 11,
(B) 1 bis 70 Gew. % mindestens einer Komponente (B) ausgewählt aus der Gruppe von feinteiligen Füllstoffen, Pigmenten oder Farbstoffen,
(C) 0,1 bis 40 Gew. % des Copolymers (C) gemäß einem der Ansprüche 1 bis 8 oder 10, sowie
(D) 5 bis 83,9 Gew. % mindestens eines Lösemittels (D),
wobei die Mengen jeweils auf die Gesamtmenge aller Komponenten der Formulierung bezogen sind.

## Claims

1. A method of applying a corrosion control coat to a metallic surface by applying a preparation which is curable under atmospheric conditions to the bright or precoated metallic surface in a thickness of at least 15 µm, said preparation comprising at least
- 15% to 70% by weight of at least one binder system curable under atmospheric conditions (A),
- 1% to 70% by weight of at least one component (B) selected from the group of finely divided fillers, pigments or dyes,
- 0.1% to 40% by weight of a polymeric corrosion preventative (C), and
- 5% to 83.9% by weight of at least one solvent (D),
the amounts being based in each case on the total amount of all of the components of the formulation, and
said polymeric corrosion preventative being a copolymer (C) synthesized from the following monomeric building blocks:
(C1) 5% to 60% by weight of at least one monoethylenically unsaturated monomer which contains at least one, preferably exactly one, nitrile group,
(C2) 10% to 70% by weight of at least one monoethylenically unsaturated monomer which comprises at least one acid group,
(C3) 20% to 80% by weight of at least one monoethylenically unsaturated aromatic hydrocarbon, and
(C4) optionally 0% to 25% by weight of further, non-(C1) to (C3) ethylenically unsaturated monomers,
the amount being based in each case on the total amount of all monomeric structural units in the copolymer,
and subsequently curing the applied layer under atmospheric conditions,
atmospheric conditions being understood as meaning curing temperatures of more than 0 to 40°C in the presence of air and a relative atmospheric humidity of from 10% to 80%.

2. The method according to claim 1, wherein monomer (C1) comprises acrylonitrile.

3. The method according to claim 1 or 2, wherein monomer (C3) comprises styrene.

4. The method according to any one of claims 1 to 3, wherein monomer (C2) comprises itaconic acid.

5. The method according to any one of claims 1 to 4, wherein the acid groups may have been wholly or partly neutralized.

6. The method according to any one of claims 1 to 5, wherein the amount of monomer (C1) is 5% to 45%, of monomer (C2) is 15% to 60%, and of monomer (C3) is 30% to 70% by weight.

7. The method according to any one of claims 1 to 6, wherein at least one monomer (C4) is present in an amount of 0.1% to 25% by weight.

8. The method according to claim 7, wherein monomer (C4) comprises a monoethylenically unsaturated monomer comprising OH groups.

9. The method according to any one of claims 1 to 8, wherein said metallic surface is the surface of steel, zinc, zinc alloy, aluminum or aluminum alloy.

10. The method according to any one of claims 1 to 3, wherein the acid groups of monomer (C2) are carboxyl groups and/or sulfonic acid groups.

11. The method according to any one of the preceding claims, wherein the binder system is at least one selected from the group of aqueous or predominantly aqueous dispersions of polyacrylates and/or styrene-acrylate copolymers (A1), styrene-alkadiene polymers (A2), polyurethanes (A3) or alkyd resins (A4).

12. The method according to any one of the preceding claims, wherein the surface is the surface of metallic structures or metal constructions.

13. The method according to claim 12, wherein the surface is the surface of buildings, bridges, power masts, tanks, containers, pipelines, power stations, chemical plants, ships, cranes, posts, bulkheads, valves, pipes, fittings, flanges, couplings, halls, roofs, and construction steel.

14. The method according to any one of the preceding claims, wherein the thickness of the cured coat is at least 25 µm.

15. A preparation for applying a corrosion control coat to a metallic surface for atmospheric corrosion control, comprising at least the following components:
(A) 15% to 70% by weight of at least one binder system curable under atmospheric conditions (A) according to claim 11,
(B) 1% to 70% by weight of at least one component (B) selected from the group of finely divided fillers, pigments or dyes,
(C) 0.1% to 40% by weight of the copolymer (C) according to any one of claims 1 to 8 or 10, and
(D) 5% to 83.9% by weight of at least one solvent (D),
the amounts being based in each case on the total amount of all of the components of the formulation.

## Revendications

1. Procédé pour l'application de couches anticorrosion sur des surfaces métalliques, dans lequel on applique sur les surfaces métalliques nues ou préenduites une préparation durcissable dans les conditions atmosphériques, en une épaisseur d'au moins 15 µm, la préparation au moins comprenant
- 15 à 70 % en poids d'au moins un système liant (A) durcissable dans les conditions atmosphériques,
- 1 à 70 % en poids d'au moins un composant (B) choisi dans le groupe des charges finement divisées, pigments ou colorants
- 0,1 à 40 % en poids d'un agent anticorrosion polymère (C), ainsi que
- 5 à 83,9 % en poids d'au moins un solvant (D), les quantités se rapportant chacune à la quantité totale de tous les composants de la composition et l'agent anticorrosion polymère consistant en un copolymère (C) qui est constitué des composants monomères suivants :
(C1) 5 à 60 % en poids d'au moins un monomère à insaturation monoéthylénique, qui comprend au moins un, de préférence exactement un groupe nitrile,
(C2) 10 à 70 % en poids d'au moins un monomère à insaturation monoéthylénique, qui comprend au moins un groupe acide,
(C3) 20 à 80 % en poids d'au moins un hydrocarbure aromatique à insaturation monoéthylénique, ainsi que
(C4) en option 0 à 25 % en poids d'autres monomères à insaturation éthylénique, différents de (C1) à (C3),
la quantité étant chaque fois par rapport à la quantité totale de tous les composants monomères dans le copolymère,
et ensuite on fait durcir dans les conditions atmosphériques la couche appliquée,
en entendant par conditions atmosphériques des températures de durcissement de plus de 0 à 40 °C en présence d'air et à une humidité relative de l'air de 10 à 80 %.

2. Procédé selon la revendication 1, **caractérisé en ce que** le monomère (C1) consiste en acrylonitrile.

3. Procédé selon la revendication 1 ou 2, **caractérisé en ce que** le monomère (C3) consiste en styrène.

4. Procédé selon l'une quelconque des revendications 1 à 3, **caractérisé en ce que** le monomère (C2) consiste en acide itaconique.

5. Procédé selon l'une quelconque des revendications 1 à 4, **caractérisé en ce que** les groupes acides peuvent être partiellement ou totalement neutralisés.

6. Procédé selon l'une quelconque des revendications 1 à 5, **caractérisé en ce que** la quantité du monomère (C1) vaut de 5 à 45 % en poids, la quantité du monomère (C2) vaut de 15 à 60 % en poids et la quantité du monomère (C3) vaut de 30 à 70 % en poids.

7. Procédé selon l'une quelconque des revendications 1 à 6, **caractérisé en ce qu'**au moins un monomère (C4) est présent en une quantité de 0,1 à 25 % en poids.

8. Procédé selon la revendication 7, **caractérisé en ce que** le monomère (C4) consiste en un monomère à insaturation monoéthylénique, comprenant des groupes OH.

9. Procédé selon l'une quelconque des revendications 1 à 8, **caractérisé en ce que** la surface métallique consiste en la surface d'acier, de zinc ou d'alliages de zinc, d'aluminium ou d'alliages d'aluminium.

10. Procédé selon l'une quelconque des revendications 1 à 3, **caractérisé en ce que** les groupes acides du monomère (C2) consistent en des groupes carboxy et/ou des groupes sulfo.

11. Procédé selon l'une quelconque des revendications précédentes, **caractérisé en ce que** le système de liant consiste en au moins un liant choisi dans le groupe de dispersions aqueuses ou essentiellement aqueuses de polyacrylates ou copolymères styrène/acrylate (A1), copolymères styrène/alcadiène (A2), polyuréthanes (A3) ou résines alkyde (A4).

12. Procédé selon l'une quelconque des revendications précédentes, **caractérisé en ce que** les surfaces consistent en des ouvrages métalliques ou constructions métalliques.

13. Procédé selon la revendication 12, **caractérisé en ce qu'**il s'agit de la surface de bâtiments, de ponts, de pylônes, de cuves, de conteneurs, de pipelines, de centrales électriques, d'installations chimiques, de bateaux, de grues, de poteaux, de cloisons de palplanches, d'accessoires, de tubes, de garnitures, de brides, de dispositifs d'accouplement, de hangars, de toitures et d'acier de construction.

14. Procédé selon l'une quelconque des revendications précédentes, **caractérisé en ce que** l'épaisseur de couche de la couche durcie est d'au moins 25 µm.

15. Préparation destinée à l'application de couches anticorrosion sur des surfaces métalliques pour la protection contre la corrosion atmosphérique, comprenant au moins les composants suivants :
(A) 15 à 70 % en poids d'au moins un système de liant (A) durcissable dans les conditions atmosphériques, selon la revendication 11,
(B) 1 à 70 % en poids d'au moins un composant (B) choisi dans le groupe des charges finement divisées, pigments ou colorants,
(C) 0,1 à 40 % en poids du copolymère (C) selon l'une quelconque des revendications 1 à 8 ou 10, ainsi que
(D) 5 à 83,9 % en poids d'au moins un solvant (D) ;
les quantités se rapportant chacune à la quantité totale de tous les composants de la composition.
